# EUROPÄISCHE PATENTSCHRIFT

(11) **EP 1 858 745 B1**
(45) Veröffentlichungstag und Bekanntmachung des Hinweises auf die Patenterteilung: **08.05.2013**
(21) Anmeldenummer: 06708613.2
(22) Anmeldetag: 02.03.2006
(51) Int. Cl.: B60Q 9/00, B62D 15/02, B60T 7/22, B62D 1/28, B60Q 1/52, G01S 15/93, B60R 21/0134, G08G 1/16

(54) **VERFAHREN UND VORRICHTUNG ZUM VERMEIDEN EINER KOLLISION BEI EINEM SPURWECHSEL EINES FAHRZEUGS**
METHOD AND DEVICE FOR AVOIDING A COLLISION AS A VEHICLE IS CHANGING LANES
PROCEDE ET DISPOSITIF D'EVITEMENT D'UNE COLLISION LORS D'UN CHANGEMENT DE VOIE D'UN VEHICULE

(30) Priorität: 03.03.2005 DE 102005010325; 02.03.2006 DE 102006010275
(43) Veröffentlichungstag der Anmeldung: 28.11.2007
(73) Patentinhaber: Continental Teves AG & Co. oHG, 60488 Frankfurt am Main (DE)
(72) Erfinder: PFEIFFER, Jürgen, Glashütten 61479 (DE); LÜKE, Stefan, 57462 Olpe (DE); FRÖHLICH, Dirk, Bürstadt 68642 (DE); ARBITMANN, Maxim, Bad Hombug 61348 (DE)
(74) Vertreter: Graf, Ulrich
(86) Internationale Anmeldenummer: PCT/EP2006/060413
(87) Internationale Veröffentlichungsnummer: WO 2006/092431

(56) Entgegenhaltungen:
- EP-A- 0 443 185
- EP-A- 1 312 506
- EP-A- 1 470 957
- WO-A-2005/014370
- DE-C1- 4 313 568
- DE-C1- 19 507 957
- DE-C1- 19 526 452
- US-A1- 2002 067 287
- US-A1- 2005 017 857

## Beschreibung

Die Erfindung betrifft ein Verfahren zum Vermeiden einer Kollision bei einem Spurwechsel eines Fahrzeugs von einer momentanen Fahrspur auf eine Zielspur, bei dem Objekte in einem Seitenrückraum des Fahrzeugs mittels einer Umfeldüberwachungseinrichtung detektiert werden und Maßnahmen zur Beeinflussung des Fahrzeugs eingeleitet werden.

Die Erfindung betrifft ferner eine zur Durchführung des Verfahrens geeignete Vorrichtung.

Beispielsweise unter der Bezeichnung "Spurwechselassistent" sind bereits Verfahren bekannt, bei denen der Fahrer eines Kraftfahrzeugs bei einem Spurwechsel unterstützt wird. Insbesondere wird bei diesen Verfahren eine Warnung des Fahrers ausgelöst, wenn die Gefahr einer möglichen Kollision des Fahrzeugs mit einem Objekt erkannt wird, das mittels einer geeigneten Umfeldüberwachungseinrichtung erfasst worden ist.

Insbesondere geht aus der deutschen Patentschrift DE 43 13 568 C1 ein Verfahren zur Leithilfe für einen Fahrspurwechsel von einer Momentanspur auf eine benachbarte Zielspur hervor. Hierbei werden der Vorderraum und der Rückraum wenigstens der benachbarten Zielspur für den gewünschten Spurwechsel überwacht, die Abstände von dort detektierten Objekten, insbesondere Fahrzeugen, und deren Geschwindigkeiten gemessen sowie daraus Sicherheitsabstände berechnet. Wenn alle gemessenen Abstände größer als die errechneten Sicherheitsabstände sind, wird dies als möglicher Spurwechsel erkannt. Bei Kurvenfahrt können die detektierten Objekte über den Lenkwinkel der jeweiligen Fahrspur zugeordnet werden.

Die deutsche Patentschrift DE 195 26 452 C1 beschreibt eine Einrichtung zur Seitenrückraumüberwachung, bei der ein Warnsignal erzeugt wird, wenn ein Objekt in einem Seitenrückraum des Fahrzeugs erfasst wird, das sich mit größerer Geschwindigkeit als das eigene Fahrzeug bewegt und eine Fahrspurwechselanforderung vorliegt, die anhand einer Blinkgeberstellung oder einer Lenkwinkelstellung erkannt wird.

Ferner offenbart die deutsche Patentschrift DE 195 07 957 Cl ein Fahrzeug mit optischer Abtasteinrichtung für einen seitlichen Fahrbahnbereich. Die Abtasteinrichtung umfasst mehrere nebeneinander angeordnete Infrarot-Sendeelemente und ein zugehöriges CCD- Array sowie eine nachgeschaltete Auswerteeinheit, die sowohl für Kontrastbestimmung und Konturenerkennung eingerichtet ist. Mit diesem System wird die Fahrbahnoberfläche abgetastet, um eine jeweilige Fahrbahnbegrenzung ermitteln zu können und etwa beim Verlassen der Fahrbahn ein Warnsignal auszulösen.

Bei den bekannten Systemen ist es vorgesehen, dass bei einem beabsichtigten Spurwechsel ein vorgegebenes Warnsignal erzeugt wird, wenn sich ein schnelleres Fahrzeug im Seitenrückraumbereich des eigenen Fahrzeugs befindet. Insbesondere dann, wenn sich das überholende Fahrzeug nur langsam nähert, kommt es hierbei oftmals auch dann zur Auslösung von Warnsignalen, wenn die Situation von dem Fahrer gut beherrscht wird.

Dies hat den Nachteil, dass der Fahrer zu einer verringerten Akzeptanz der Warnsignale neigt und sich über die Warnsignale hinwegsetzt. In der, Folge werden die Warnsignale als störend empfunden, und es erhöht sich das Risiko, dass der Fahrer Spurwechsel auch bei start erhöhter Kollisionsgefahr trotz der Warnsignale vornimmt.

Darüber hinaus besteht oftmals das Problem, dass sich eine Gefahrensituation sehr dynamisch entwickelt, so dass der Fahrer nicht dazu in der Lage ist, hinreichend schnell auf die Warnung zu reagieren, und das Fahrzeug in einen gefährliche Bereich lenkt.

US2005/0017857A1 offenbart Systeme zur Spurhaltung, adaptiven Geschwindigkeitsregelung, Einparkhilfe und Rückwärtsfahrhilfe. Die Systeme nutzen eine Visions-basierte Detektion von Objekten bzw. Fahrzeugen und können im Fall einer drohenden Kollision Warnhinweise ausgeben und Maßnahmen zur Kollisionsvermeidung einleiten.

Der nächstliegende stand der tecknik ist in der US2005/0017857A1 zu sehen.

DE 43 13 568 C1 offenbart ein Verfahren zur Leithilfe für einen Fahrspurwechsl von einer Momentanspur auf eine benachbarte Zielspur durch ein Kraftfahrzeug. Hierbei wird der Vorraum und der Rückraum wenigstens der benachbarten Zielspur für den gewünschten Spurwechsel überwacht, die Abstände von dort detektierten Objekten, insbesondere Fahrzeugen, und deren Geschwindigkeiten gemessen sowie daraus Sicherheitsabstände berechnet. Wenn alle gemessenen Abstände größer als die errrechneten Sicherheitsabstände sind, wird dies als möglicher Spurwechsel erkannt. Der Fahrer wird dadurch weitgehend von Überwachungsaufgaben und einem Schätzen von Abständen und Geschwindigkeiten nachfolgender und vorausfahrender Fahrzeug entlastet.

Es ist daher eine Aufgabe der vorliegenden Erfindung, Maßnahmen zur Verhinderung einer Kollision des Fahrzeugs während eines Spurwechsels besser an die situationsabhängig vorliegende Kollisionsgefahr anzupassen.

Erfindungsgemäß wird diese Aufgabe durch ein Verfahren mit den Merkmalen des Patentanspruchs 1 sowie durch eine Vorrichtung mit den Merkmalen des Patentanspruchs 38 gelöst.

Demgemäß ist es vorgesehen, dass ein verfahren der eingangs genannten Art so durchgeführt wird, dass abgestufte Maßnahmen vorgesehene sind, wobei die Maßnahmen entsprechend ihrer Stufo ein Narnen des Fahrers und/oder ein Eingreifen in ein Lenksystem des Fahrzeugs und/oder ein Beeinflussen von Sicherheitsmitteln umfassen, und dass die Maßnahmen einer ausgewählten Stufe eingeleitet werden, wobei die Stufe in Abhängigkeit von einer relativen Position eines detektierten Objekts in Bezug auf das Fahrzeug und/oder einer Relativgeschwindigkeit zwischen dem Fahrzeug und dem detektierten Objekt sowie in Abhängigkeit von der Erfüllung einer Spurwechselbedingung bestimmt wird.

Ferner ist es vorgesehen die Vorrichtung zum Vermeiden einer Kollision bei einem Spurwechsel eines Fahrzeugs auf eine Zielspur, umfassend eine Umfeldüberwachungseinrichtung, mittels derer Objekte in einem Seitenrückraum des Fahrzeugs erfassbar sind, Maßnahmen zur Beeinflussung des Fahrzeugs eingeleitet werden, so auszugestalten, dass sie über einen Gefahrenrechner verfügt, mit dem abgestufte Maßnahmen zur Beeinflussung des Fahrzeugs einleitbar sind, wobei die Maßnahmen entsprechend ihrer Stufe ein Warnen des Fahrers und/oder ein Eingreifen in ein Lenksystem des Fahrzeugs und/oder ein Beeinflussen von Sicherheitsmitteln umfassen, und dass mittels des Gefahrenrechners Maßnahmen einer Stufe einleitbar sind, die in Abhängigkeit von einer relativen Position eines detektierten Objekts in Bezug auf das Fahrzeug und/oder einer Relativgeschwindigkeit zwischen dem Fahrzeug und dem detektierten Objekt sowie in Abhängigkeit von der Erfüllung einer Spurwechselbedingung bestimmbar ist.

Die Erfindung beinhaltet die Idee, abgestufte Maßnahmen zur Vermeidung einer Kollision bei einem Spurwechsel bzw. zur Erhöhung der Sicherheit der Fahrzeuginsassen bei einer aufgrund eines Spurwechsels drohenden Kollision vorzunehmen, die an die vorliegende Verkehrsituation, die anhand der relativen Position und/oder der relativen Geschwindigkeit zwischen dem Fahrzeug und einem detektierten Objekt ermittelt wird, angepasst sind. Insbesondere kann der Fahrer in einer ersten Warnstufe bereits über eine bestehende, jedoch geringe Kollisionsgefahr informiert werden und in einer höheren Warnstufe durch geeignete kollisionsvermeidende Maßnahmen eindrücklicher darauf hingewiesen werden, dass es bei einem beabsichtigten Spurwechsel zu einer Kollision kommen kann.

Hierdurch wird die Akzeptanz der kollisionsverhindernden Maßnahmen durch den Fahrer erhöht und vermieden, dass der Fahrer sich bei einem großen Gefahrenpotential über die getroffenen Maßnahmen leichtfertig hinwegsetzt. Ferner können in einer höheren Warnstufe weitere, wirkungsvollere Maßnahmen zur Verhinderung einer Kollision oder zur Verringerung der Folgen einer Kollision ergriffen werden, wenn der Fahrer trotz der in einer geringeren Warnstufe eingesetzten Maßnahmen einen Spurwechsel eingeleitet hat.

Bei einer vorteilhaften Ausführungsform des erfindungsgemäßen Verfahrens und der erfindungsgemäßen Vorrichtung ist es vorgesehen, dass aufgrund einer Erfassung des Seitenrückraums des Fahrzeugs mittels der Umfeldüberwachungseinrichtung ein Fahrbahnverlauf im Rückraum des Fahrzeugs ermittelt wird.

Eine weitere vorteilhafte Ausführungsform des erfindungsgemäßen Verfahrens und der erfindungsgemäßen Vorrichtung zeichnet sich dadurch aus, dass in Abhängigkeit von der Position des detektierten Objekts in Bezug auf das Fahrzeug, der Relativgeschwindigkeit zwischen dem detektierten Objekt und dem Fahrzeug sowie dem Fahrbahnverlauf eine Bahn des detektierten Objekts prädiziert wird.

Drüber hinaus ist es vorteilhaft vorgesehen, dass mittels der Umfeldüberwachungseinrichtung eine Fahrbahnmarkierung erfasst wird, die die momentane Fahrspur des Fahrzeugs von der Zielspur trennt.

Eine bevorzugte Ausgestaltung des erfindungsgemäßen Verfahrens und der erfindungsgemäßen Vorrichtung beinhaltet, dass ein detektiertes Objekt anhand der relativen Position des Objekts in Bezug auf das Fahrzeug und anhand des Fahrbahnverlaufs der Zielspur zugeordnet wird.

Hierdurch kann eine besonders zuverlässige Bewertung der Gefahr einer Kollision mit einem detektierten Objekt auch dann vorgenommen werden, wenn sich das Objekt im Rückraum des Fahrzeugs in einer großen Entfernung von dem Fahrzeug befindet.

In einer bevorzugten Ausführungsform des erfindungsgemäßen Verfahrens und der erfindungsgemäßen Vorrichtung ist es vorgesehen, dass ein optisches Warnsignal ausgelöst wird, wenn aufgrund eines Spurwechsels auf die Zielspur ein longitudinaler Abstand zwischen dem Fahrzeug und einem innerhalb der Zielspur detektierten Objekt kleiner als ein vorgegebener Mindestabstand werden würde.

Der Fahrer wird somit zunächst durch ein optisches Warnsignal auf die Gefahr bei einem möglichen Spurwechsel hingewiesen. Es wurde dabei festgestellt, dass der Fahrer dies als eine Zusatzinformation über das Verkehrsgeschehen wahrnimmt, die er nicht als störend empfindet.

Unter dem longitudinalen Abstand zwischen dem Kraftfahrzeug und einem Objekt wird dabei im Rahmen der Erfindung der entlang des ermittelten Fahrbahnverlaufs gemessene Abstand verstanden, der sich bei einer Kurven aufweisenden Fahrbahn von dem in Fahrzeuglängsrichtung gemessenen Abstand unterscheidet.

Vorzugsweise ist es vorgesehen, dass das optische Warnsignal durch ein Einschalten eines in einen Außenspiegel des Fahrzeugs integrierten Leuchtelements ausgelöst wird.

Damit nimmt der Fahrer das optische Warnsignal insbesondere dann wahr, wenn er in den Außenspiegel des Fahrzeugs blickt, um die Möglichkeit eines Spurwechsels zu prüfen und wird dabei auf die mögliche Gefahr bei dem Spurwechsel hingewiesen.

Eine weitere vorteilhafte Ausbildung der Erfindung ist dadurch gekennzeichnet, dass das optische Warnsignal durch ein Einschalten eines an einer A-Säule des Fahrzeugs angeordneten Leuchtelements ausgelöst wird.

Hierdurch ist das Leuchtelement zur optischen Fahrerwarnung im seitlichen Blickfeld das Fahrers angeordnet, auch wenn dieser geradeaus schaut. Somit wird der Fahrer ständig bei der Entscheidung, wann er Spurwechsel nicht durchführen sollte, unterstützt.

Eine weitere bevorzugte Ausführungsform des erfindungsgemäßen Verfahrens beinhaltet, dass ein akustisches Warnsignal ausgelöst wird, wenn aufgrund eines Spurwechsels auf die Zielspur der longitudinale Abstand zwischen dem Fahrzeug und dem innerhalb der Zielspur detektierten Objekt kleiner als ein vorgegebener Mindestabstand werden würde und eine erste Spurwechselbedingung erfüllt ist.

Falls eine Spurwechselabsicht des Fahrers daran erkannt wird, dass die erste Spurwechselbedingung erfüllt ist, wird der Fahrer durch das akustische Warnsignal deutlicher, insbesondere deutlicher als durch das optische Warnsignal, auf die Gefahr einer Kollision bei einem Spurwechsel hingewiesen.

Zweckmäßigerweise ist es vorgesehen, dass das akustische Warnsignal ausgelöst wird, indem wenigstens ein Fahrzeuglautsprecher zur Abgabe eines Warntons veranlasst wird.

Darüber hinaus sieht eine vorteilhafte Ausgestaltung des erfindungsgemäßen Verfahrens und der erfindungsgemäßen Vorrichtung vor, dass der Fahrzeuglautsprecher auf einer zu der Zielspur gerichteten Fahrzeugseite angeordnet ist.

Hierdurch wird der Fahrer intuitiv darauf aufmerksam, dass eine Gefahr aus der Richtung droht, in die er das Fahrzeug bei dem Spurwechsel zu steuern beabsichtigt, und wird somit dazu veranlasst, eine weitere Prüfung der Möglichkeiten für einen Spurwechsel vorzunehmen und den Spurwechsel gegebenenfalls nicht einzuleiten.

Eine zweckmäßige Ausgestaltung des erfindungsgemäßen Verfahrens und der erfindungsgemäßen Vorrichtung ist dadurch gekennzeichnet, dass die erste Spurwechselbedingung erfüllt ist, wenn der Fahrer einen Richtungsanzeiger auf der zu der Zielspur gerichteten Fahrzeugseite aktiviert.

Eine noch deutlichere Warnung des Fahrers ist dann angemessen, wenn dieser über die Einschaltung des Richtungsanzeigers hinaus weitere Veranstaltungen zur Durchführung eines Spurwechsels unternimmt.

In einer bevorzugten Ausführungsform des erfindungsgemäßen Verfahrens und der erfindungsgemäßen Vorrichtung ist es daher vorgesehen, dass ein haptisches Warnsignal ausgelöst wird, wenn aufgrund eines Spurwechsels auf die Zielspur der longitudinale Abstand zwischen dem Fahrzeug und dem innerhalb der Zielspur detektierten Objekt kleiner als ein vorgegebener Mindestabstand werden würde und wenn eine zweite Spurwechselbedingung erfüllt ist.

Eine vorteilhafte Ausführungsform des erfindungsgemäßen Verfahrens und der erfindungsgemäßen Vorrichtung sieht zudem vor, dass die zweite Spurwechselbedingung erfüllt ist, wenn sich ein Abstand zwischen dem Fahrzeug und einer auf der zur Zielspur gerichteten Fahrzeugseite liegenden Fahrbahnmarkierung während einer vorgegebenen Zeitdauer und/oder unter einen vorgegebenen Mindestabstand verringert.

Anhand einer derartigen Spurwechselbedingung kann besonders zuverlässig ermittelt werden, ob der Fahrer den Spurwechsel durch eine Lenkbewegung einleitet.

Insbesondere für den Fall, dass keine Fahrspurmarkierungen vorhanden sind bzw. erfasst werden können, ist es in einer weiteren vorteilhaften Ausführungsform des erfindungsgemäßen Verfahrens und der erfindungsgemäßen Vorrichtung vorgesehen, dass die zweite Spurwechselbedingung erfüllt ist, wenn sich ein lateraler Abstand zwischen dem Fahrzeug und einem der Zielspur zugeordneten detektierten Objekt während einer vorgegebenen Zeitdauer und/oder unter einen vorgegebenen Mindestabstand verringert.

Vorzugsweise handelt es sich beim dem lateralen Abstand und einen lateralen Abstand zwischen dem Objekt und dem Fahrzeug, der aufgrund der Berechnung der Bahn des Objekts für den Zeitpunkt prädiziert wird, in dem sich das Objekt auf gleicher Höhe wie das Fahrzeug befindet.

Vorzugsweise beinhaltet eine Ausführungsform des erfindungsgemäßen Verfahrens und der erfindungsgemäßen Vorrichtung, dass das haptische Warnsignal dadurch ausgelöst wird, dass eine Lenkhandhabe des Fahrzeugs mit einem richtungswechselnden Lenkmoment beaufschlagt wird.

Aufgrund eines derartigen haptischen Warnsignals wird der Fahrer intuitiv darauf aufmerksam, dass aufgrund seiner Lenkbewegungen zum Einleiten eines Spurwechsels eine erhöhte Kollisionsgefahr besteht.

Darüber hinaus ist eine besonders vorteilhafte Ausführungsform des erfindungsgemäßen Verfahrens und der erfindungsgemäßen Vorrichtung dadurch gekennzeichnet, dass ein Gefahrenpotential in Abhängigkeit von dem longitudinalen Abstand, der sich aufgrund eines Spurwechsels auf die Zielspur zwischen dem Fahrzeug und dem innerhalb der Zielspur detektierten Objekt einstellen würde, sowie in Abhängigkeit von einer Relativgeschwindigkeit zwischen dem Fahrzeug und dem detektierten Objekt ermittelt wird.

Mit dem Gefahrenpotential wird dabei eine Größe ermittelt, die ein Maß für die Wahrscheinlichkeit einer Kollision aufgrund eines Spurwechsels ist. Das Gefahrenpotential erlaubt damit eine weitergehende Bewertung der vorliegenden Verkehrssituation.

Eine vorteilhafte Ausführungsform des erfindungsgemäßen Verfahrens und der erfindungsgemäßen Vorrichtung zeichnet sich dadurch aus, dass anhand des Fahrbahnverlaufs eine Position des Fahrzeugs innerhalb seiner Fahrspur bestimmt wird und dass das Gefahrenpotential in Abhängigkeit von der Position des Fahrzeugs in seiner Fahrspur bestimmt wird.

Auf diese Weise wird auch der Abstand zu den Fahrbahnmarkierungen bei der Warn- bzw. Eingreifstrategie in Betracht gezogen.

Vorzugsweise ist es zudem vorgesehen, dass das Gefahrenpotential in Abhängigkeit von der Geschwindigkeit des Fahrzeugs ermittelt wird.

Ferner ist es vorzugsweise vorgesehen, dass das Gefahrenpotential in Abhängigkeit von einer Gierrate des Fahrzeugs ermittelt wird.

Darüber hinaus zeichnet sich eine vorteilhafte Ausgestaltung des erfindungsgemäßen Verfahrens und der erfindungsgemäßen Vorrichtung dadurch aus, dass das Gefahrenpotential in Abhängigkeit von einem Lenkwinkel lenkbarer Räder des Fahrzeugs ermittelt wird.

Weiterhin ist es bei einer vorteilhafte Ausgestaltung der Erfindung vorgesehen, dass das Gefahrenpotential in Abhängigkeit von einer Lenkwinkelgeschwindigkeit und/oder einem von dem Fahrer des Fahrzeugs aufgebrachten Lenkmoment ermittelt wird.

Bei einer vorteilhaften Ausführungsform des erfindungsgemäßen Verfahrens und der erfindungsgemäßen Vorrichtung wird das Gefahrenpotential dazu verwendet, das Ausmaß bzw. die Deutlichkeit der haptischen Warnung an die aufgrund der vorliegenden Verkehrssituation bestehenden Gefahrenhöhe bei einem Spurwechsel anzupassen.

In dieser Ausführungsform ist es vorteilhaft vorgesehen, dass das haptische Warnsignal für eine Zeitdauer ausgelöst wird, die in Abhängigkeit von dem vorliegenden Gefahrenpotential bestimmt wird.

weiterhin zeichnet sich eine bevorzugte Ausgestaltung des erfindungsgemäßen Verfahrens und der erfindungsgemäßen Vorrichtung dadurch aus, dass die Lenkhandhabe mit einem richtungsfesten Lenkmoment beaufschlagt wird, um das Fahrzeug vollständig in die momentane Fahrspur zurückzuführen oder in der Fahrspur zu halten, wenn aufgrund eines Spurwechsels auf die Zielspur der longitudinale Abstand zwischen dem Fahrzeug und einem detektierten Objekt innerhalb der Zielspur kleiner als ein vorgegebener Mindestabstand werden würde, wenn die zweite Spurwechselbedingung erfüllt ist und wenn das Gefahrenpotential größer als ein erster Schwellenwert ist.

Anhand des richtungskonstanten Lenkmoments wird dem Fahrer eine Lenkempfehlung zur Rückführung des Fahrzeugs in die ursprüngliche Fahrspur bzw. zum Halten des Fahrzeugs in der Fahrspur gegeben, wenn aufgrund eines hohen Wertes des Gefahrenpotentials bei einem Spurwechsel eine Kollisionsgefahr besteht. Dies ist insbesondere dann sehr vorteilhaft, wenn sich eine Gefahrensituation mit einer so hohen Dynamik entwickelt, so dass der Fahrer nicht ausreichend schnell auf eine vorherige Warnung reagieren kann.

Gleichfalls kann sich der Fahrer jedoch über einen derartigen Eingriff in das Lenksystem des Fahrzeugs hinwegsetzen und den Spurwechsel trotz des Eingriffs vornehmen, wenn er dies wünscht. Hierdurch ist es ihm beispielsweise möglich, beim Auffahren auf ein Stauende einen Frontalaufprall auf das Stauende zu vermeiden und stattdessen eine seitliche Kollision zu riskieren bzw. in Kauf zu nehmen, die in der Regel weniger folgenschwer ist.

Im Hinblick auf eine solche Situation ist es bei einer vorteilhaften Ausbildung des erfindungsgemäßen Verfahrens und der erfindungsgemäßen Vorrichtung zudem vorgesehen, dass mittels einer weiteren Objekterfassungseinrichtung ein Abstand zwischen dem Fahrzeug und einem Objekt in einem Vorderraum des Fahrzeugs detektierbar ist, und dass die Lenkhandhabe nur dann mit einem richtungsfesten Moment beaufschlagt wird, wenn in dem Vorderraum kein Objekt detektiert wird, dessen Abstand zu dem Fahrzeug geringer als ein vorgegebener Mindestabstand ist.

Somit kann der Fahrer ohne Behinderung ausweichen, wenn eine Frontalkollision droht, und dem Frontalaufprall eine weniger folgenschwere seitliche Kollision vorziehen.

Vorzugsweise ist es dabei vorgesehen, dass der Mindestabstand in Abhängigkeit von einer Relativgeschwindigkeit zwischen dem Fahrzeug und einem im Vorderraum des Fahrzeugs detektierten Objekt bestimmt wird.

Eine weitere bevorzugte Ausführungsform des erfindungsgemäßen Verfahrens und der erfindungsgemäßen Vorrichtung beinhaltet, dass eine Beeinflussung wenigstens eines reversiblen Sicherheitsmittels des Fahrzeugs erfolgt, wenn aufgrund eines Spurwechsels auf die Zielspur der longitudinale Abstand zwischen dem Fahrzeug und dem innerhalb der Zielspur detektierten Objekt kleiner als ein vorgegebener Mindestabstand werden würde, wenn die zweite Spurwechselbedingung erfüllt ist und wenn das Gefahrenpotential größer als ein zweiter Schwellenwert ist.

Vorteilhaft wird das Fahrzeug in dieser Ausführungsform durch eine Ansteuerung reversibler Sicherheitsmittel auf eine Kollision vorbereit, wenn der Fahrer einen Spurwechsel eingeleitet hat, und eine Kollision aufgrund eines sehr hohen Wertes des Gefahrenpotentials als sehr wahrscheinlich angesehen wird. Hierdurch wird die Insassensicherheit bei der drohenden Kollision erhöht.

Es ist dabei vorzugsweise vorgesehen, dass der zweite Schwellenwert größer als der erste Schwellenwert ist.

Vorzugsweise ist es zudem vorgesehen, dass eine Beeinflussung wenigstens eines reversiblen Sicherheitsmittels des Fahrzeugs erfolgt, wenn aufgrund der prädizierten Bahn des Objekts festgestellt wird, dass sich das Objekt auf einem Kollisionskurs mit dem Fahrzeug befindet und eine Kollision mit dem Fahrzeug innerhalb einer ersten Kollisionszeitdauer zu erwarten ist.

Auf diese Weise wird das Fahrzeug durch eine Ansteuerung von reversiblen Sicherheitsmitteln auf ein Kollision mit einem Objekt vorbereitet, das sich seinerseits auch ohne dass der Fahrer einen Spurwechsel vornimmt, auf einem Kollisionskurs mit dem Fahrzeug befindet.

In einer vorteilhaften Ausführungsform des erfindungsgemäßen Verfahrens und der erfindungsgemäßen Vorrichtung ist das reversible Sicherheitsmittel ein reversibler Gurtstraffer.

Bei einer weiteren vorteilhaften Ausführungsform des erfindungsgemäßen Verfahrens und der erfindungsgemäßen Vorrichtung ist es vorgesehen, dass es sich bei dem reversiblen Sicherheitsmittel um wenigstens einen Aktuator handelt, mit dem eine Sitzposition des Fahrers und/oder Beifahrers des Fahrzeugs verändert wird.

Ferner zeichnet sich eine weitere vorteilhafte Ausgestaltung des erfindungsgemäßen Verfahrens und der erfindungsgemäßen Vorrichtung dadurch aus, dass es sich bei dem reversiblen Sicherheitsmittel um wenigstens einen Aktuator handelt, mit dem ein Schiebedach und/oder ein Fenster des Fahrzeugs geschlossen wird.

Darüber hinaus zeichnet sich eine weitere bevorzugte Ausgestaltung des erfindungsgemäßen Verfahrens und der erfindungsgemäßen Vorrichtung dadurch aus, dass eine Beeinflussung irreversibler Sicherheitsmittel des Fahrzeugs erfolgt, wenn aufgrund eines Spurwechsels auf die Zielspur der longitudinale Abstand zwischen dem Fahrzeug und dem innerhalb der Zielspur detektierten Objekt kleiner als ein vorgegebener Mindestabstand werden würde, wenn die zweite Spurwechselbedingung erfüllt ist und wenn das Gefahrenpotential größer als ein dritter Schwellenwert ist.

In dieser Ausführungsform wird das Fahrzeug durch eine Beeinflussung irreversibler Sicherheitsmittel auf eine Kollision vorbereit, die aufgrund eines besonders hohen Wertes des Gefahrenpotentials als nahezu nicht mehr vermeidbar angesehen wird, um die Sicherheit der Insassen des Fahrzeugs weiter zu erhöhen.

Vorzugsweise ist der dritte Schwellenwert dabei größer als der zweite Schwellenwert.

Zudem sieht eine vorteilhafte Ausgestaltung des erfindungsgemäßen Verfahrens und der erfindungsgemäßen Vorrichtung vor, dass eine Beeinflussung wenigstens eines irreversiblen Sicherheitsmittels des Fahrzeugs erfolgt, wenn aufgrund der prädizierten Bahn des Objekts festgestellt wird, dass sich das Objekt auf einem Kollisionskurs mit dem Fahrzeug befindet und eine Kollision mit dem Fahrzeug innerhalb einer zweiten Kollisionszeitdauer zu erwarten ist.

Hierdurch wird das Fahrzeug durch eine Beeinflussung irreversibler Sicherheitsmittel auf eine aufgrund einer sehr kurzen Kollisionszeitdauer nahezu unvermeidbare Kollision mit einem Objekt vorbereitet, das sich seinerseits auf einem Kollisionskurs mit dem Fahrzeug befindet.

Vorzugsweise ist es dabei vorgesehen,dass die zweite Kollisionszeitdauer kleiner ist als die erste Kollisionszeitdauer.

Eine zweckmäßige Ausgestaltung des erfindungsgemäßen Verfahrens und der erfindungsgemäßen Vorrichtung sieht vor, dass die Beeinflussung des irreversiblen Sicherheitsmittels erfolgt, indem Aktivierungskriterien des irreversiblen Sicherheitsmittels verändert werden.

Vorteilhaft ist es dabei vorgesehen, dass es sich bei dem irreversiblen Sicherheitsmittel um einen Airbag handelt.

In einer weiteren besonders bevorzugten Ausführungsform des erfindungsgemäßen Verfahrens und der erfindungsgemäßen Vorrichtung ist es vorgesehen, dass es sich bei der Umfeldüberwachungseinrichtung um ein Kamerasystem handelt, das zwei Kamerasensoren umfasst.

Vorzugsweise ist es vorgesehen, dass jeweils ein Kamerasensor an einer Fahrzeugseite angeordnet ist.

Eine vorteilhafte Ausgestaltung des erfindungsgemäßen Verfahrens und der erfindungsgemäßen Vorrichtung ist darüber hinaus dadurch gekennzeichnet, dass die Kamerasensoren in die Außenspiegel des Fahrzeugs integriert sind.

Bei einer weiteren vorteilhaften Ausgestaltung des erfindungsgemäßen Verfahrens und der erfindungsgemäßen Vorrichtung ist es vorgesehen, dass die Umfeldüberwachungseinrichtung einen in den Rückraum des Fahrzeugs gerichteten Kamerasensor sowie einen Nahbereichssensor auf jeder Fahrzeugseite umfasst, wobei mittels der Nahbereichssensoren Objekte in einem Seitenbereich des Fahrzeugs detektiert werden können.

Weiterhin zeichnet sich eine vorteilhafte Ausbildung des erfindungsgemäßen Verfahrens und der erfindungsgemäßen Vorrichtung dadurch aus, dass die seitlichen Kamerasensoren oder der in den Rückraum des Fahrzeugs gerichteten Kamerasensor auch für die Vermessung einer Parklücke eingesetzt werden können.

Die Umfeldüberwachungseinrichtung ist somit für mehrere Einsatzzwecke geeignet, wobei neben der erfindungsgemäßen Spurwechselassistenzfunktion insbesondere auch eine Einparkhilfefunktion mithilfe der Umfeldüberwachungseinrichtung durchgeführt werden kann.

Um dabei vorhandene Hardwareresourcen möglichst effizient einzusetzen, sieht eine vorteilhafte Ausführungsform des erfindungsgemäßen Verfahrens und der erfindungsgemäßen Vorrichtung vor, dass der Gefahrenrechner auch dazu ausgebildet ist, aufgrund von Signalen der seitlichen Kamerasensoren oder des in den Rückraum des Fahrzeugs gerichteten Kamerasensors eine Größe einer Parklücke und/oder eine relative Lage der Parklücke in Bezug auf das Fahrzeug zu ermitteln.

Eine weitere vorteilhafte Ausgestaltung des erfindungsgemäßen Verfahrens und der erfindungsgemäßen Vorrichtung beinhaltet, dass der Gefahrenrechner auch dazu ausgebildet ist, anhand der Signale der seitlichen Kamerasensoren oder des in den Rückraum des Fahrzeugs gerichteten Kamerasensors eine Bahn des Fahrzeugs für das Befahren der Parklücke ausgehend von einer Ausgangsposition zu ermitteln.

Weitere Vorteile, Besonderheiten und zweckmäßige Weiterbildungen des erfindungsgemäßen Verfahrens und der erfindungsgemäßen Vorrichtung ergeben sich aus den Unteransprüchen und der nachfolgenden Darstellung bevorzugter Ausführungsbeispiele anhand der Figur.

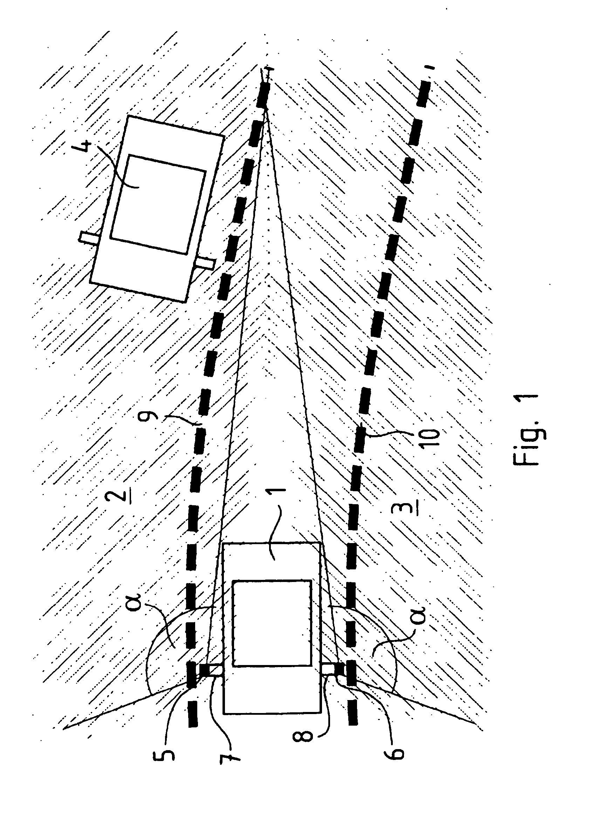

Die Figur 1 zeigt den Erfassungsbereich einer Umfeldüberwachungseinrichtung eines Fahrzeugs.

Die Erfindung schafft eine Spurwechselassistenzfunktion, die den Fahrer eines Kraftfahrzeugs 1 anhand gestufter Maßnahmen über die Kollisionsgefahr bei einem möglichen oder bereits beabsichtigten Spurwechsel informiert und eine Kollision anhand geeigneter Maßnahmen verhindert bzw. im Falle einer drohenden Kollision Maßnahmen zur Erhöhung der Insassensicherheit einleitet. Die Funktion bezieht sich dabei auf die Gefahr einer Kollision mit einem überholenden Fahrzeug oder mit einem überholten Fahrzeug bzw. mit einem Fahrzeug, das sich in dem so genannten Totwinkelbereich des Kraftfahrzeugs 1 befindet. Sie eignet sich besonders für Fahrten bei hoher Geschwindigkeit auf einer Landstraße oder Autobahn, kann grundsätzlich jedoch ebenfalls im Stadtverkehr eingesetzt werden.

Um die im Rahmen der Erfindung vorgesehene Überwachung des Seitenrückraums 2, 3 des Kraftfahrzeugs 1 durchzuführen, verfügt das Kraftfahrzeug über eine geeignete Umfeldüberwachungseinrichtung. Als ein zu erfassendes Objekt in dem Seitrückraumbereich 2 ist in der schematischen Darstellung in Figur 1 ein weiteres Kraftfahrzeug 4 dargestellt.

Als besonders vorteilhaft für die Umfeldüberwachung hat sich der Einsatz eines Kamerasystems erwiesen, welches über zwei Kamerasensoren 5, 6 verfügt, die in die Außenspiegel 7, 8 des Kraftfahrzeugs integriert sind und ein Erfassungswinkel α von ca. 120° aufweisen. Die Kamerasensoren 5, 6 gestatten dabei nicht nur eine Erfassung von Objekten im Seitenrückraum 2, 3, des Kraftfahrzeugs 1 sowie die Bestimmung der Positionen der detektierten Objekte relativ zu dem Kraftfahrzeug 1 und der Relativgeschwindigkeiten zwischen dem Kraftfahrzeug 1 und den detektierten Objekten, sondern auch die Erfassung von Fahrbahnmarkierungen 9, 10 im Seitenbereich des Kraftfahrzeugs 1 und eine Erfassung des Verlaufs der Fahrbahn bzw. der Fahrspuren im Rückraum des Kraftfahrzeugs 1. Ferner hat die Verwendung von Kamerasensoren den Vorteil, dass auch Objekte erfasst werden können, die sich in großer Entfernung von dem Kraftfahrzeug 1 befinden.

Die Kamerabilder werden einem Gefahrenrechner zugeführt, der anhand der Bilder sowie anhand von Fahrzeuggrößen, wie der Fahrzeuggeschwindigkeit, der Gierrate und dem Lenkwinkel, die von entsprechenden Fahrzeugsensoren erfasst bzw. aus den Messsignalen von Fahrzeugsensoren berechnet werden, den Seitenrückraum 2, 3 des Kraftfahrzeugs 1 analysiert und relevante Größen der detektierten Objekte ermittelt. Die Auswertung der Kamerabilder beruht dabei insbesondere auf einer Kontrastmessung und einer Konturen- bzw. Mustererkennung innerhalb der Bilder oder auf der Methode des optischen Flusses.

Bei der Auswertung der Kamerabilder werden in dem Gefahrenrechner die relativen Positionen der detektierten Objekte in Bezug auf das Kraftfahrzeug 1 ermittelt und mit den über den Fahrbahnverlauf gewonnenen Daten in Beziehung gesetzt, wobei die detektierten Objekte einer Fahrspur zugeordnet werden. Ferner werden die Relativgeschwindigkeiten zwischen den detektierten Objekten und dem Kraftfahrzeug 1 bestimmt und anhand des ermittelten Verlaufs der Fahrspur im Rückraum des Kraftfahrzeugs 1 wird der von den detektierten Objekten zurückzulegende Weg bis zum Erreichen des Kraftfahrzeugs 1 ermittelt. Hieraus wird dann die Bahn der detektierten Objekte prädiziert.

Infolge der Auswertung der Kamerabilder kann somit berechnet werden, zu welchen Zeitpunkten sich die detektierten Objekte in welchen longitudinalen Abständen zu dem Kraftfahrzeug 1 befinden werden und in welcher Fahrspur sich die detektierten Objekte bewegen. Unter dem longitudinalen Abstand zwischen dem Kraftfahrzeug und einem Objekt wird dabei im Rahmen der Erfindung der entlang des ermittelten Fahrbahnverlaufs gemessene Abstand verstanden, der sich bei einer Kurven aufweisenden Fahrbahn von dem in Fahrzeuglängsrichtung gemessenen Abstand unterscheidet.

Die Ermittlung der Fahrspur ist insbesondere bei Fahrbahnen von Bedeutung, die mehr als zwei Spuren aufweisen. Anhand der Zuordnung der detektierten Objekte zu den vorhandenen Fahrspuren kann dabei ermittelt werden, ob sich in der Zielspur eines Spurwechsels ein Objekt befindet, für das eine Kollision mit dem Kraftfahrzeug 1 besteht. Bei einer dreispurigen Fahrbahn werden somit beispielsweise Fehlwarnungen vermieden, die bei einem Spurwechsel von der rechten Spur auf die mittlere Spur ausgelöst werden könnten, wenn sich auf der linken Spur ein Fahrzeug von hinten nähert.

Darüber hinaus wird anhand der Kamerabilder auch die Position des Kraftfahrzeugs 1 innerhalb seiner Fahrspur, d.h. insbesondere der Abstand des Kraftfahrzeugs 1 von den auf der linken und rechten Fahrzeugseite liegenden Fahrbahnmarkierungen sowie die Gesamtbreite der Fahrspur ermittelt.

Falls Fahrspurmarkierungen 9, 10 nicht vorhanden sind bzw. nicht erfasst werden konnten, kann anstelle der Zuordnung des Kraftfahrzeugs 1 und der detektierten Objekte zu den durch die Fahrbahnmarkierungen 9, 10 definierten Fahrspuren ein lateraler Abstand zwischen den Objekten und dem Kraftfahrzeug 1, der aufgrund der Berechnung der Objektbahnen für den Zeitpunkt prädiziert wird, in dem die Objekte sich auf gleicher Höhe wie das Kraftfahrzeug 1 befinden, zur Durchführung der Spurwechselassistenzfunktion herangezogen werden. Anhand dieses lateralen Abstands können die detektierten Objekte dabei ebenfalls einer Fahrspur zugeordnet werden, wobei eine Fahrspur in diesem Fall einem Fahrbahnbereich mit einer vorgegebenen lateralen Ausdehnung seitlich von dem Kraftfahrzeug 1 entspricht.

Anhand der zuvor genannten Daten, die für jedes der detektierten Objekte ermittelt werden, bestimmt der Gefahrenrechner die Objekte, die sich in der benachbarten Fahrspur bewegen bzw. beim Erreichen des Kraftfahrzeugs 1 einen lateralen Abstand zu dem Kraftfahrzeug aufweisen, der geringer als ein Mindestabstand ist, der in etwa einer Fahrspurbreite entspricht. Dies sind die Objekte, mit denen das Kraftfahrzeug 1 bei einem Spurwechsel möglicherweise kollidieren kann.

Ferner werden auch diejenigen Objekte bestimmt, die sich bei Beibehaltung der gegenwärtigen Fahrspur und Fahrgeschwindigkeit auf einem Kollisionskurs mit dem Fahrzeug befinden, d.h. die Objekte, die sich ihrerseits aktiv auf das Fahrzeug zu bewegen.

Für die Objekte bestimmt der Gefahrenrechner zudem die Zeitdauer bis zu einer Kollision, die aufgrund eines Spurwechsels auf die entsprechende benachbarte Zielspur erfolgen würde oder aufgrund eines gegenwärtigen Kollisionskurses der Objekte und des Fahrzeugs erfolgen könnte und die im Folgenden als Kollisionszeitdauer (TTC, time to collision) bezeichnet wird.

Anhand der Kollisionszeitdauer und vorzugsweise anhand weiterer Daten, wie beispielsweise dem Abstand des Kraftfahrzeugs 1 zu der Fahrbahnmarkierung zwischen den Fahrspuren, in denen sich das Kraftfahrzeug selbst und das Objekt bewegen, bzw. dem für den Kollisionszeitpunkt prädizierten lateralen Abstand zwischen dem Kraftfahrzeug 1 und dem detektierten Objekt, der sich einstellt, wenn kein Spurwechsel vorgenommen wird, und der Relativgeschwindigkeit zwischen dem Kraftfahrzeug 1 und dem Objekt, wird im Hinblick auf einen Spurwechsel ein Gefahrenpotential für die Objekte berechnet. Vorzugsweise gehen zudem der Lenkwinkel an den lenkbaren Rädern des Fahrzeugs, die Lenkwinkelgeschwindigkeit sowie das von Fahrer aufgebrachte Lenkmoment in die Bestimmung des Gefahrenpotentials ein. Das Gefahrenpotential ist ein Maß für die Wahrscheinlichkeit, dass das Kraftfahrzeug 1 aufgrund eines Spurwechsels mit dem Objekt kollidieren wird und erlaubt eine weitergehende Bewertung der Verkehrssituation im Hinblick auf mögliche Kollisionen insbesondere bei einem Spurwechsel.

Ferner kann aufgrund eines Objektmodells und anhand der Bahnprädiktion für die Objekte und das Fahrzeug eine Kollisionskurssicherheit bestimmt werden, die als zusätzliche Schätzgröße für die Bewertung in den Gefahrenrechner einfließt und ein Maß für die Güte der Prädiktion der Bahnen der detektierten Objekte ist. Vorzugsweise ist es dabei vorgesehen, dass ein Objekt nur dann als gefährlich eingestuft wird, wenn die Kollisionskurssicherheit für dieses Objekt einen bestimmten Schwellenwert überschreitet.

Anstelle der beiden Kamerasensoren 5, 6 kann die Umfeldüberwachungseinrichtung im Rahmen der Erfindung über beliebige Mittel verfügen, die eine Bestimmung der zuvor beschriebenen Daten gestatten. Eine alternative, kostengünstigere Umfeldüberwachungseinrichtung umfasst beispielsweise einen nach hinten gerichteten Kamerasensor, der auch als Rückfahrkamera eingesetzt werden kann, sowie zwei an den Fahrzeugseiten angeordnete Nahbereichssensoren, die als Infrarot- oder Ultraschallsensoren ausgebildet sein können.

Die Erfindung sieht eine Spurwechselassistenzfunktion vor, bei der entsprechend der vorliegenden Verkehrssituation abgestufte Maßnahmen zur Vermeidung einer Kollision und/oder zur Erhöhung der Sicherheit der Fahrzeuginsassen bei einer drohenden Kollision eingeleitet werden. In Abhängigkeit der zuvor beschriebenen infolge der Umfeldüberwachung mittels der Kamerasensoren 5, 6 gewonnen Daten werden dabei Warnsignale durch den Gefahrenrechner ausgelöst und/oder Eingriffe in das Lenkungssystem des Kraftahrzeugs 1 vorgenommen und/oder eine Beeinflussung von reversiblen und/oder irreversiblen Sicherheitsmitteln vorgenommen.

Dabei ist es vorgesehen, dass von dem Gefahrenrechner in einer ersten Stufe ein optisches Warnsignal ausgelöst wird, wenn aufgrund eines Spurwechsels auf eine benachbarte Zielspur ein longitudinaler Sicherheitsabstand zu einem detektierten Objekt unterschritten werden würde. Der Sicherheitsabstand wird vorzugsweise in Abhängigkeit von der Fahrzeuggeschwindigkeit vorgegeben und entspricht beispielsweise einem zeitlichen Abstand von etwa 1,8 s, d.h. der so genannten "Halber-Tacho-Abstand"-Regel. Ferner kann es auch vorgesehen sein, dass ein optisches Warnsignal ausgelöst wird, wenn sich im Rückraum des Kraftfahrzeugs 1 ein detektiertes Objekt innerhalb derselben Fahrspur mit einer Relativgeschwindigkeit nähert, die größer als ein vorgegebener Schwellenwert ist. Auf diese Weise wird der Fahrer auch dann durch ein optisches Warnsignal auf eine erhöhte Gefahr bei einem Spurwechsel aufmerksam gemacht, wenn sich innerhalb der eigenen Fahrspur ein Objekt nähert, das eine wesentlich höhere Geschwindigkeit besitzt als das eigene Kraftfahrzeug 1, so dass von einem baldigen Spurwechsel dieses Objekts auszugehen ist.

Falls keine Fahrspurmarkierungen ausgemacht werden können, so wird in Abhängigkeit von den ermittelten und berechneten relativen Abständen der Objekte in Bezug auf das Kraftfahrzeug 1 ermittelt, ob es bei einem Spurwechsel auf eine benachbarte Zielspur zu einer Kollision mit einem Objekt kommen kann. Die erste Warnstufe wird dabei ebenfalls aktiviert, wenn sich aufgrund eines Spurwechsels der prädizierte longitudinale Abstand zwischen dem Kraftfahrzeug 1 und einem detektierten Objekt unter den Sicherheitsabstand verringern würde.

Bei dem optischen Warnsignal handelt es sich vorzugsweise um ein farbiges Licht, das wenigstens in dem Außenspiegel 7, 8 des Kraftfahrzeugs 1 angezeigt wird, der sich auf der Fahrzeugseite befindet, auf der das für die Warnung maßgebliche Objekt das Kraftfahrzeug 1 erreichen wird. In einer vorteilhaften Ausführungsform der Erfindung ist es zudem vorgesehen, dass in beiden Außenspiegeln 7, 8 des Kraftfahrzeugs 1 ein farbiges Licht angezeigt wird. In einer weiteren bevorzugten Ausführungsform der Erfindung können Leuchtelemente zur optischen Warnung des Fahrers auch in der A-Säule des Fahrzeugs integriert und somit für den Fahrer leichter einsehbar sein.

Die erste Stufe wird deaktiviert bzw. die optische Warnung wird beendet, wenn die zuvor beschriebenen Aktivierungsbedingungen nicht mehr erfüllt sind, d.h. wenn kein Objekt mehr im Seitenrückraum 2, 3 detektiert wird, zu dem ein Sicherheitsabstand aufgrund eines Spurwechsels unterschritten werden würde.

Schaltet der Fahrer bei aktivierter erster Warnstufe einen Fahrtrichtungsanzeiger auf der Fahrzeugseite ein, auf der das für die Warnung maßgebliche Objekt das Kraftfahrzeug 1 erreichen wird, wird eine zweite Stufe aktiviert, in welcher der Fahrer durch ein akustisches Warnsignal auf die Gefahrensituation aufmerksam gemacht wird. Hierzu wird vorzugsweise wenigstens ein Lautsprecher auf der betreffenden Fahrzeugseite angesteuert und zur Ausgabe eines Warntons veranlasst. Die Art und/oder die Lautstärke des Warntons wird dabei in einer vorteilhaften Ausführungsform der Erfindung in Abhängigkeit von dem Betrag ermittelt, um den der longitudinale Sicherheitsabstand zu dem maßgeblichen Objekt aufgrund eines Spurwechsels unterschritten werden würde.

Die in der zweiten Warnstufe vorgesehene akustische Warnung wird vorzugsweise zusätzlich zu der in der ersten Warnstufe vorgesehenen optischen Warnung aktiviert. Eine Deaktivierung erfolgt in einer Ausführungsform der Erfindung, wenn der Fahrer den eingeschalteten Fahrtrichtungsanzeiger wieder ausschalter. In einer weiteren Ausführungsform der Erfindung, die vor allem für Fahrzeuge geeignet ist, bei denen der Fahrtrichtungsanzeiger zur Anzeige einer Spurwechselabsicht nicht eingerastet, sondern lediglich "angetippt" zu werden braucht, wird die akustische Warnung des Fahrers beendet, wenn innerhalb eines vorgegebenen Zeitintervalls keine Maßnahmen einer höheren Stufe eingeleitet worden sind. Ist dies jedoch der Fall, wird die akustische Warnung vorzugsweise zusammen mit den Maßnahmen der höheren Stufen beendet.

Maßnahmen der weiteren Stufe werden vorgenommen, wenn erkannt wird, dass der Fahrer einen Spurwechsel auf eine Zielspur einleitet, auf der eine Kollision mit einem detektierten Objekt möglich ist. Dies wird vorzugsweise daran erkannt, dass sich das Kraftahrzeug 1 wenigstens für eine vorgegebene Zeitdauer kontinuierlich der Fahrbahnmarkierung 9, 10 nähert, welche die momentane Fahrspur und die Zielspur trennt. Zusätzlich oder alternativ kann es vorgesehen sein, dass die Einleitung eines Spurwechsels nur dann erkannt wird, wenn sich der Abstand zwischen dem Kraftfahrzeug 1 und dieser Fahrbahnmarkierung unter einen vorgegebenen Minimalabstand verringert hat, der vorzugsweise in Abhängigkeit von der Gesamtbreite der momentanen Fahrspur bestimmt wird.

Falls keine Fahrspurmarkierungen vorhanden sind bzw. ermittelt werden können, werden Maßnahmen weiterer Stufen dann vorgenommen, wenn sich der laterale Abstand zu einem detektierten Objekt, der für den Zeitpunkt, zu dem das Objekt das Kraftfahrzeug 1 erreichen wird, innerhalb eines vorgegebenen Zeitintervalls kontinuierlich verringert und/oder wenn sich dieser Abstand unter einen vorgegebenen weiteren Minimalwert verringert.

Ferner wird dann, wenn die Einleitung eines Spurwechsels durch den Fahrer erkannt worden ist, das Gefahrenpotential für das maßgebliche detektierte Objekt für eine Situationsbewertung herangezogen und es werden Maßnahmen einer Stufe eingeleitet, die in Abhängigkeit von dem Gefahrenpotential ausgewählt wird.

Ist das Gefahrenpotential kleiner als ein vorgegebener erster Schwellenwert, wird eine dritte Stufe aktiviert, bei der eine Fahrerwarnung anhand eines haptischen Warnsignals vorgesehen ist. Hierzu wird ein richtungswechselndes Lenkmoment auf das Lenkrad des Kraftfahrzeugs 1 aufgebracht. Das Lenkmoment weist vorteilhaft einen Betrag zwischen ca. 1,5 und 4,5 Nm, vorzugsweise von 3 Nm, und eine Frequenz zwischen 1 und 20 Hz auf. Die Frequenz kann fest vorgegeben werden, ansteigend sein oder in einer besonders vorteilhaften Ausführungsform der Erfindung in Abhängigkeit von dem Gefahrenpotential bestimmt werden. Ferner kann auch die Amplitude des Lenkmoments in Abhängigkeit von dem vorliegenden Wert des Gefahrenpotentials ermittelt werden. Die Dauer der Momentenaufschaltung wird vorzugsweise ebenfalls in Abhängigkeit von dem vorliegenden Wert des Gefahrenpotentials ermittelt.

Zum Erzeugen des Lenkmoments kann jede geeignete dem Fachmann bekannte Einrichtung verwendet werden. Ein Beispiel für eine derartige Einrichtung ist eine elektrische Servolenkung, bei der ein Lenkmoment mittels eines Elektromotors in den Lenkstrang des Kraftfahrzeugs eingesteuert wird. Im konventionellen Betrieb wird dieses Lenkmoment dabei in Abhängigkeit von dem Fahrerlenkmoment und dem durch den Fahrer eingestellten Lenkwinkel ermittelt und dient zur Verstärkung des Fahrerlenkmoments. Über eine Schnittstelle, beispielsweise zu einem Fahrzeugbussystem, wie dem üblicherweise in Fahrzeugen eingesetzen CAN-Bus (CAN: Controller Area Network), kann der Elektromotor jedoch auch fahrerunabhängig angesteuert werden, so dass unabhängig von den Fahrervorgaben ein weiteres Lenkmoment in den Lenkstrang eingesteuert werden kann.

Die haptische Warnung wird beendet, wenn anhand des Abstandes des Fahrzeugs zu der Fahrbahnmarkierung oder anhand des prädizierten lateralen Abstands zu dem für die Warnung maßgeblichen detektierten Objekt erkannt wird, dass das Kraftfahrzeug 1 in die ursprüngliche Fahrspur zurückgeführt bzw. der Spurwechsel nicht fortgeführt wird, oder wenn die vierte Stufe aktiviert worden ist.

Die vierte Stufe wird aktiviert, wenn das Einleiten eines Spurwechsels durch den Fahrer erkannt wird und das Gefahrenpotential für ein Objekt auf der Zielspur größer als der erste vorgegebene Schwellenwert ist. In der vierten Stufe werden Maßnahmen zur Rückführung des Fahrzeugs in die Fahrspur eingeleitet. Vorzugsweise wird der Lenkstrang bzw. das Lenkrad des Kraftfahrzeugs 1 dabei mit einem richtungskonstanten Lenkmoment beaufschlagt, das zur Rückführung des Kraftfahrzeugs 1 in die Fahrspur dient. Die vierte Stufe wird deaktiviert und das Lenkmoment wird zurückgenommen, wenn anhand des Abstandes des Kraftfahrzeugs 1 zu der Fahrbahnmarkierung oder anhand des prädizierten lateralen Abstands zu dem für die Warnung maßgeblichen detektierten Objekt erkannt wird, dass das Kraftfahrzeug 1 in die ursprüngliche Fahrspur zurückgeführt bzw. der Spurwechsel nicht fortgeführt wird und/oder wenn das Gefahrenpotential den ersten Schwellenwert unterschreitet.

Grundsätzlich kann es auch vorgesehen sein, das Kraftfahrzeug 1 durch das Einstellen eines in dem Gefahrenrechner ermittelten Lenkwinkels in die Fahrspur zurückzuführen. Die Aufschaltung eines Lenkmoments hat demgegenüber jedoch den Vorteil, dass der Fahrer sich hierüber hinwegsetzen und den Spurwechsel trotz der von dem Gefahrenrechner eingeleiteten Maßnahmen vornehmen kann, wenn er dies wünscht. Hierdurch kann er beispielsweise beim Auffahren auf ein Stauende einen Frontalaufprall verhindern und eine seitliche Kollision mit einem weiteren Fahrzeug vorziehen, die in der Regel weniger folgenschwer ist.

Im Hinblick auf Situationen, in denen ein Frontalaufprall auf ein Hindernis nur durch einen Spurwechsel verhindert werden kann, sieht die Erfindung vorzugsweise zudem vor, dass der Vorderraum des Fahrzeugs mit einer weiteren Objekterkennungseinrichtung überwacht wird. Hierbei kann es sich beispielsweise um die Abstandssensorik eines dem Fachmann an sich bekannten ACC-Systems (ACC: Adaptive Cruise Control) handeln. Anhand einer derartigen Abstandssensorik kann eine Gefahrenbewertung hinsichtlich des Risikos eines Frontalaufpralls vorgenommen werden, um bei einem drohenden Frontalaufprall keine Momentaufschaltung auf das Lenkrad vorzunehmen und dem Fahrer ein freies Ausweichen zu ermöglichen.

Vorzugsweise wird dabei aus dem Abstand und der Relativgeschwindigkeit zwischen dem Kraftfahrzeug 1 und einem vor dem Fahrzeug befindlichen Objekt innerhalb des Gefahrenrechners ein weiteres Gefahrenpotential ermittelt. Überschreitet dieses Gefahrenpotential einen vorgegebenen Schwellenwert, so erfolgt in der dritten und vierten Stufe keine Momentenaufschaltung bzw. die dritte und vierte Stufe werden nicht ausgelöst. Die in der zweiten Stufe vorgesehene akustische Warnung wird in diesem Fall vorzugsweise aufrechterhalten, kann jedoch auch beendet werden.

Wenn die Einleitung eines Spurwechsels durch den Fahrer erkannt worden ist und das Gefahrenpotential einen zweiten Schwellenwert überschreitet, der größer als der erste Schwellenwert ist, werden im Rahmen einer fünften Stufe reversible Sicherheitsmaßnahmen zur Erhöhung der Sicherheit der Fahrzeuginsassen im Falle einer Kollision eingeleitet. Dies geschieht vorzugsweise zusätzlich zu den Maßnahmen, die aufgrund der Aktivierung niedrigerer Stufen vorgenommen werden.

Ferner werden die reversiblen Sicherheitsmaßnahmen auch dann eingeleitet, wenn sich ein Objekt auch ohne dass die Einleitung eines Spurwechsels durch den Fahrer erkannt worden ist, auf einem Kollisionskurs mit dem Fahrzeug befindet und die Kollisionszeitdauer einen ersten Schwellenwert unterschreitet.

Die reversiblen Sicherheitsmaßnahmen können insbesondere in einer Ansteuerung von elektrischen Gurtstraffern sowie in der Ansteuerung von Aktuatoren zur Veränderung der Sitzposition der Fahrzeuginsassen bestehen. Mittels derartiger Aktuatoren kann beispielsweise die Sitzlehne aufrecht gestellt werden und die Kopfstütze sowie das Sitzkissen können höher gestellt werden, um die Fahrzeuginsassen in eine günstige Position für eine Kollision zu bringen. Darüber hinaus kann es auch vorgesehen sein, geöffnete Fenster des Kraftfahrzeugs 1 oder ein geöffnetes Schiebedach zu schließen, um die Sicherheit der Fahrzeuginsassen zu erhöhen.

Die fünfte Stufe wird deaktiviert, wenn anhand des Abstandes des Kraftfahrzeugs 1 zu der Fahrbahnmarkierung oder anhand des prädizierten lateralen Abstands zu dem für die Warnung maßgeblichen detektierten Objekt erkannt wird, dass das Kraftfahrzeug 1 in die ursprüngliche Fahrspur zurückgeführt bzw. der Spurwechsel nicht fortgeführt wird und/oder wenn das Gefahrenpotential den zweiten Schwellenwert oder den ersten Schwellenwert unterschreitet. Bei der Deaktivierung werden die vorgenommenen Maßnahmen vorzugsweise rückgängig gemacht, d.h., der Gurtstraffer wird gelöst und die Sitze, die Fenster und das Schiebedach werden in die ursprünglichen Positionen verfahren, die dazu in einem Speicher abgelegt worden sind. Um den Fahrer dabei nicht dadurch zu irritieren, dass zwar die fünfte Stufe, nicht jedoch die vierte Stufe deaktiviert wird, ist für die Deaktivierung der fünften Stufe ebenso wie für die Deaktivierung der vierten Stufe vorzugsweise der erste Schwellenwert des Gefahrenpotentials maßgeblich.

Wenn eine Kollision bei einem Spurwechsel als unvermeidbar eingestuft wird, was der Fall ist, wenn die Einleitung eines Spurwechsels durch den Fahrer erkannt worden ist, und das Gefahrenpotential einen dritten Schwellenwert überschreitet, der größer als der zweite Schwellenwert ist, erfolgt im Rahmen einer sechsten Stufe eine Beeinflussung von irreversiblen Sicherheitsmitteln des Fahrzeugs wie beispielsweise Airbags oder pyrotechnische Gurtstraffer.

Ferner werden die irreversiblen Sicherheitsmaßnahmen auch dann eingeleitet, wenn eine Kollision mit einem Objekt, das sich auf einem Kollisionskurs aktiv auf das Fahrzeug zu bewegt, als unvermeidbar eingestuft wird, da die Kollisionszeitdauer für dieses Objekt einen zweiten Schwellenwert unterschritten hat, der kleiner als der erste Schwellenwert für die Kollisionszeitdauer ist.

Irreversible Sicherheitsmittel werden üblicherweise in Abhändigkeit von Beschleunigungssignalen angesteuert, die von Beschleunigungssensoren geliefert werden und die Erkennung einer Kollision gestatten. Bei der Erfindung ist es vorgesehen, dass im Rahmen der sechsten Stufe eine Vorkonditionierung der irreversiblen Sicherheitsmittel vorgenommen wird, die vorzugsweise in einer Anpassung der Auslösekriterien besteht. So können beispielsweise in der sechsten Stufe durch den Gefahrenrechner die Beschleunigungsschwellenwerte, die für die Zündung eines oder mehrerer Airbags maßgeblich sind, verringert werden, so dass diese Airbags im Falle einer Kollision rascher gezündet werden. Da aufgrund der Auswertung der von den Kamerasensoren 5, 6 aufgenommenen Bilder ebenfalls ermittelt werden kann, an welcher Stelle und mit welcher Geschwindigkeit das Kraftfahrzeug 1 bei einer Kollision von einem Objekt getroffen wird, können gleichfalls die Beschleunigungsschwellenwerte für die Zündung von Airbags, die aufgrund des Treffpunktes eine geringere Sicherheitsrelevanz haben, angehoben werden.

Die sechste Stufe wird deaktiviert, und die ursprünglichen Auslösekriterien für die irreversiblen Sicherheitsmittel werden wiederhergestellt, wenn anhand des Abstandes des Fahrzeugs zu der Fahrbahnmarkierung oder anhand des prädizierten lateralen Abstands zu dem für die Warnung maßgeblichen detektierten Objekt erkannt wird, dass das Kraftfahrzeug 1 in die ursprüngliche Fahrspur zurückgeführt bzw. der Spurwechsel nicht fortgeführt wird und/oder wenn das Gefahrenpotential den dritten Schwellenwert unterschreitet.

Die zur Durchführung der erfindungsgemäßen Spurwechselassistenzfunktion vorgesehene Umfeldüberwachungseinrichtung kann auch zur Realisierung weiterer Assistenzfunktionen herangezogen werden. So kann die ermittelte Information über den Abstand zwischen dem Kraftfahrzeug 1 und der erfassten Fahrbahnmarkierung 9, 10 für eine Funktion genutzt werden, die den Fahrer unabhängig von der sonstigen Verkehrssituation warnt, wenn sich das Kraftfahrzeug 1 den Fahrbahnmarkierungen 9, 10 nähert oder die Fahrbahnmarkierungen 9, 10 überfährt. Durch eine derartige Funktion kann verhindert werden, dass das Kraftfahrzeug 1 seine Fahrspur aufgrund einer Unaufmerksamkeit des Fahrers verlässt. Eine derartige Spurwechselwarnung kann insbesondere in Nutzfahrzeugen sinnvoll eingesetzt werden.

Darüber hinaus kann mithilfe der Umfeldüberwachungseinrichtung eine Einparkhilfefunktion durchgeführt werden, bei der Parklücken vermessen werden und der Fahrer bei einem Einparkvorgang in eine Parklücke unterstützt wird. Die Unterstützung kann dabei beispielsweise darin bestehen, dass dem Fahrer durch eine Aufschaltung von Lenkmomenten auf die Lenkhandhabe des Fahrzeugs Lenkempfehlungen zum Befahren einer zuvor vermessenen Parklücke gegeben werden oder dass die Lenkung während des Einparkvorgangs durch ein Steuergerät vollständig automatisch gesteuert wird.

Neben der Umfeldüberwachungseinrichtung kann dabei auch die im Rahmen der Spurwechselassistenzfunktion verwendete Hardware, insbesondere das für die Auswertung der Kamerabilder und zur Einleitung der vorgesehenen Maßnahmen vorgesehene elektronische Steuersystem, zur Durchführung weiterer Assistenzfunktionen verwendet werden.

So kann dieses System bei hohen Fahrzeuggeschwindigkeiten anhand einer entsprechenden Software die erfindungsgemäße Spurwechselassistenzfunktion durchführen und Spurwechselwarnungen auslöse. Bei kleinen Fahrzeuggeschwindigkeiten kann das System anhand einer entsprechenden Software zur Durchführung einer Einparkhilfefunktion herangezogen werden.

## Patentansprüche

1. Verfahren zum Spurwechsel eines Fahrzeugs von einer momentanen Fahrspur auf eine Zielspur, bei dem Objekte in einem Seitenrückraum des Fahrzeugs mittels einer Umfeldüberwachungseinrichtung detektiert werden und Maßnahmen zur Beeinflussung des Fahrzeugs oder des Fahrers eingeleitet werden, wobei eine der Maßnahmen ein Warnen des Fahrers ist,
**dadurch gekeanzeichnet,**
dass zum Vermeiden einer Kollision bei dem Spurwechsel die Maßnahmen abgestuft vorgesehen sind, wobei die Maßnahmen entsprechend ihrer Stufe das Warnen des Fahrers und ein Eingreifen in ein Lenksystem des Fahrzeugs (1) und ein Beeinflussen von Sicherheitsmitteln umfassen, und dass die Maßnahmen einer ausgewählten Stufe eingeleitet werden, wobei die Stufe in Abhängigkeit von einer relativen Position eines detektierten Objekts (4) in Bezug auf das Fahrzeug (1) und einer Relativgeschwindigkeit zwischen dem Fahrzeug (1) und dem detektierten Objekt (4) und einer Erfassung des Verlaufs der Fahrbahn bzw. der Fahrspuren im Rückraum des Fahrzeugs (1) sowie in Abhängigkeit von der Erfüllung einer Spurwechselbedingung bestimmt wird und eine Lenkhandhabe mit einem richtungsfesten Lenkmoment beaufschlagt wird, um das Fahrzeug (1) vollständig in die momentane Fahrspur zurückzuführen oder in der Fahrspur zu halten, wenn aufgrund eines Spurwechsels auf die Zielspur der longitudinale Abstand zwischen dem Fahrzeug (1) und dem innerhalb der Zielspur detektierten Objekt (4) kleiner als ein vorgegebener Mindestabstand werden würde, wenn eine zweite Spurwechselbedingung erfüllt ist und wenn das Gefahrenpotential größer als ein erster Schwellenwert ist.

2. Verfahren nach Anspruch 1,
**dadurch gekennzeichnet,**
**dass** aufgrund einer Erfassung des Seitenrückraums (2, 3) des Fahrzeugs (1) mittels der Umfeldüberwachungseinrichtung (5, 6) ein Fahrbahnverlauf im Rückraum des Fahrzeugs (1) ermittelt wird.

3. Verfahren nach Anspruch 1 oder 2,
**dadurch gekennzeichnet,**
**dass** in Abhängigkeit von der Position des detektierten Objekts (4) in Bezug auf das Fahrzeugs (1), der Relativgeschwindigkeit zwischen dem detektierten Objekt (4) und dem Fahrzeug (1) sowie dem Fahrbahnverlauf eine Bahn des detektierten Objekts (4) prädiziert wird.

4. Verfahren nach einem der vorangegangenen Ansprüche,
**dadurch gekennzeichnet,**
**dass** mittels der Umfeldüberwachungseinrichtung (5, 6) eine Fahrbahnmarkierung (9; 10) erfasst wird, die die momentane Fahrspur des Fahrzeugs (1) von der Zielspur trennt.

5. Verfahren nach einem der vorangegangen Ansprüche,
**dadurch gekennzeichnet,**
**dass** ein detektiertes Objekt (4) anhand der relativen Position des Objekts (4) in Bezug auf das Fahrzeug (1) und anhand des Fahrbahnverlaufs der Zielspur zugeordnet wird.

6. Verfahren nach einem der vorangegangenen Ansprüche,
**dadurch gekennzeichnet,**
**dass** ein optisches Warnsignal ausgelöst wird, wenn aufgrund eines Spurwechsels auf die Zielspur ein longitudinaler Abstand zwischen dem Fahrzeug (1) und einem innerhalb der Zielspur detektierten Objekt (4) kleiner als ein vorgegebener Mindestabstand werden würde.

7. Verfahren nach Anspruch 6,
**dadurch gekennzeichnet,**
**dass** das optische Warnsignal durch ein Einschalten eines in einen Außenspiegel (7; 8) des Fahrzeugs (1) integrierten Leuchtelements ausgelöst wird.

8. Verfahren nach Anspruch 6,
**dadurch gekennzeichnet,**
**dass** das optische Warnsignale durch ein Einschalten eines an einer A-Säule des Fahrzeugs angeordneten Leuchtelements ausgelöst wird.

9. Verfahren nach einem der vorangegangenen Ansprüche,
**dadurch gekennzeichnet,**
**dass** ein akustisches Warnsignal ausgelöst wird, wenn aufgrund eines Spurwechsels auf die Zielspur ein ermittelter Abstand zwischen dem Fahrzeug (1) und einem detektierten Objekt (4) innerhalb der Zielspur kleiner als ein vorgegebener Mindestabstand werden würde und eine erste Spurwechselbedingung erfüllt ist.

10. Verfahren nach Anspruch 9,
**dadurch gekennzeichnet,**
**dass** das akustische Warnsignal ausgelöst wird, indem wenigstens ein Fahrzeuglautsprecher zur Abgabe eines Warntons veranlasst wird.

11. Verfahren nach Anspruch 10,
**dadurch gekennzeichnet,**
**dass** der Fahrzeuglautsprecher auf einer zu der Zielspur gerichteten Fahrzeugseite angeordnet ist.

12. Verfahren nach einem der vorangegangenen Ansprüche,
**dadurch gekennzeichnet,**
**dass** die erste Spurwechselbedingung erfüllt ist, wenn der Fahrer einen Richtungsanzeiger auf der zu der Zielspur gerichteten Fahrzeugseite aktiviert.

13. Verfahren nach einem der vorangegangenen Ansprüche,
**dadurch gekennzeichnet,**
**dass** ein haptisches Warnsignal ausgelöst wird, wenn aufgrund eines Spurwechsels auf die Zielspur der longitudinale Abstand zwischen dem Fahrzeug (1) und dem innerhalb der Zielspur detektierten Objekt (4) kleiner als ein vorgegebener Mindestabstand werden würde und wenn eine zweite Spurwechselbedingung erfüllt ist.

14. Verfahren nach einem der vorangegangenen Ansprüche,
**dadurch gekennzeichnet,**
**dass** die zweite Spurwechselbedingung erfüllt ist, wenn sich ein Abstand zwischen dem Fahrzeug (1) und der Fahrbahnmarkierung (9; 10) während einer vorgegebenen Zeitdauer und/oder unter einen vorgegebenen Mindestabstand verringert.

15. Verfahren nach einem der vorangegangenen Ansprüche,
**dadurch gekennzeichnet,**
**dass** die zweite Spurwechselbedingung erfüllt ist, wenn sich ein lateraler Abstand zwischen dem Fahrzeug (1) und einem der Zielspur zugeordneten detektierten Objekt (4) während einer vorgegebenen Zeitdauer und/oder unter einen vorgegebenen Mindestabstand verringert.

16. Verfahren nach einem der Ansprüche 13 bis 15,
**dadurch gekennzeichnet,**
**dass** das haptische Warnsignal dadurch ausgelöst wird, dass eine Lenkhandhabe des Fahrzeugs (1) mit einem richtungswechselnden Lenkmoment beaufschlagt wird.

17. Verfahren nach einem der vorangegangenen Ansprüche,
**dadurch gekennzeichnet,**
**dass** ein Gefahrenpotential in Abhängigkeit von dem longitudinalen Abstand, der sich aufgrund eines Spurwechsels auf die Zielspur zwischen dem Fahrzeug (1) und dem innerhalb der Zielspur detektierten Objekt (4) einstellen würde, sowie in Abhängigkeit von einer Relativgeschwindigkeit zwischen dem Fahrzeug (1) und dem detektierten Objekt (4) ermittelt wird.

18. Verfahren nach Anspruch 17,
**dadurch gekennzeichnet,**
**dass** anhand des Fahrbahnverlaufs eine Position des Fahrzeugs (1) innerhalb seiner Fahrspur bestimmt wird und dass das Gefahrenpotential in Abhängigkeit von der Position des Fahrzeugs (1) in seiner Fahrspur bestimmt wird.

19. Verfahren nach Anspruch 17 oder 18,
**dadurch gekennzeichnet,**
**dass** das Gefahrenpotential in Abhängigkeit von der Geschwindigkeit des Fahrzeugs (1) ermittelt wird.

20. Verfahren nach einem der Ansprüche 17 bis 19,
**dadurch gekennzeichnet,**
**dass** das Gefahrenpotential in Abhängigkeit von einer Gierrate des Fahrzeugs (1) ermittelt wird.

21. Verfahren nach einem der Ansprüche 17 bis 20,
**dadurch gekennzeichnet,**
**dass** das Gefahrenpotential in Abhängigkeit von einem Lenkwinkel lenkbarer Räder des Fahrzeugs (1) ermittelt wird.

22. Verfahren nach einem der Ansprüche 17 bis 21,
**dadurch gekennzeichnet,**
**dass** das Gefahrenpotential in Abhängigkeit von einer Lenkwinkelgeschwindigkeit und/oder einem von dem Fahrer des Fahrzeugs (1) aufgebrachten Lenkmoment ermittelt wird.

23. Verfahren nach einem der Ansprüche 13 bis 22,
**dadurch gekennzeichnet,**
**dass** das haptische Warnsignal für eine Zeitdauer ausgelöst wird, die in Abhängigkeit von dem vorliegenden Gefahrenpotential bestimmt wird.

24. Verfahren nach Anspruch 23,
**dadurch gekennzeichnet,**
**dass** mittels einer weiteren Objekterfassungseinrichtung ein Abstand zwischen dem Fahrzeug (1) und einem Objekt in einem Vorderraum des Fahrzeugs (1) detektierbar ist, und dass die Lenkhandhabe nur dann mit einem richtungsfesten Moment beaufschlagt wird, wenn in dem Vorderraum kein Objekt detektiert wird, dessen Abstand zu dem Fahrzeug (1) geringer als ein vorgegebener Mindestabstand ist.

25. Verfahren nach Anspruch 24,
**dadurch gekennzeichnet,**
**dass** der Mindestabstand in Abhängigkeit von einer Relativgeschwindigkeit zwischen dem Fahrzeug (1) und einem im Vorderraum des Fahrzeugs (1) detektierten Objekt bestimmt wird.

26. Verfahren nach einem der vorangegangenen Ansprüche,
**dadurch gekennzeichnet,**
**dass** eine Beeinflussung wenigstens eines reversiblen Sicherheitsmittels des Fahrzeugs (1) erfolgt, wenn aufgrund eines Spurwechsels auf die Zielspur der longitudinale Abstand zwischen dem Fahrzeug (1) und einem innerhalb der Zielspur detektierten Objekt (4) kleiner als ein vorgegebener Mindestabstand werden würde, wenn die zweite Spurwechselbedingung erfüllt ist und wenn das Gefahrenpotential größer als ein zweiter Schwellenwert ist.

27. Verfahren nach Anspruch 26,
**dadurch gekennzeichnet,**
**dass** der zweite Schwellenwert größer als der erste Schwellenwert ist.

28. Verfahren nach einem der vorangegangenen Ansprüche,
**dadurch gekennzeichnet,**
**dass** eine Beeinflussung wenigstens eines reversiblen Sicherheitsmittels des Fahrzeugs (1) erfolgt, wenn aufgrund der prädizierten Bahn des Objekts festgestellt wird, dass sich das Objekt auf einem Kollisionskurs mit dem Fahrzeug (1) befindet und eine Kollision mit dem Fahrzeug (1) innerhalb einer ersten Kollisionszeitdauer zu erwarten ist.

29. Verfahren nach einem der Ansprüche 26, bis 28,
**dadurch gekennzeichnet,**
**dass** es sich bei dem reversiblen Sicherheitsmittel um einen reversiblen Gurtstraffer handelt.

30. Verfahren nach einem der Ansprüche 26 bis 29,
**dadurch gekennzeichnet,**
**dass** es sich bei dem reversiblen Sicherheitsmittel um wenigstens einen Aktuator handelt, mit dem eine Sitzposition des Fahrers und/oder Beifahrers des Fahrzeugs (1) verändert wird.

31. Verfahren nach einem der Ansprüche 26 bis 30,
**dadurch gekennzeichnet,**
**dass** es sich bei dem reversiblen Sicherheitsmittel um wenigstens einen Aktuator handelt, mit dem ein Schiebedach und/oder ein Fenster des Fahrzeugs (1) geschlossen wird.

32. Verfahren nach einem der vorangegangenen Ansprüche,
**dadurch gekennzeichnet,**
**dass** eine Beeinflussung wenigstens eines irreversiblen Sicherheitsmittels des Fahrzeugs (1) erfolgt, wenn aufgrund eines Spurwechsels auf die Zielspur der longitudinale Abstand zwischen dem Fahrzeug (1) und dem innerhalb der Zielspur detektierten Objekt kleiner als ein vorgegebener Mindestabstand werden würde, wenn die zweite Spurwechselbedingung erfüllt ist und wenn das Gefahrenpotential größer als ein dritter Schwellenwert ist.

33. Verfahren nach Anspruch 32,
**dadurch gekennzeichnet,**
**dass** der dritte Schwellenwert größer als der zweite Schwellenwert ist.

34. Verfahren nach einem der vorangegangenen Ansprüche,
**dadurch gekennzeichnet,**
**dass** eine Beeinflussung wenigstens eines irreversiblen Sicherheitsmittels des Fahrzeugs (1) erfolgt, wenn aufgrund der prädizierten Bahn des Objekts festgestellt wird, dass sich das Objekt auf einem Kollisionskurs mit dem Fahrzeug (1) befindet und eine Kollision mit dem Fahrzeug (1) innerhalb einer zweiten Kollisionszeitdauer zu erwarten ist.

35. Verfahren nach Anspruch 34,
**dadurch gekennzeichnet,**
**dass** die zweite Kollisionszeitdauer kleiner ist als die erste Kollisionszeitdauer.

36. Verfahren nach einem der Ansprüche 32 bis 35,
**dadurch gekennzeichnet,**
**dass** die Beeinflussung des irreversiblen Sicherheitsmittels erfolgt, indem Aktivierungskriterien des irreversiblen Sicherheitsmittels verändert werden.

37. Verfahren nach einem der Ansprüche 32 bis 36,
**dadurch gekennzeichnet,**
**dass** es sich bei dem irreversiblen Sicherheitsmittel um einen Airbag handelt.

38. Vorrichtung zum Spurwechsel eines Fahrzeugs von einer momentanen Fahrspur auf eine Zielspur, umfassend eine Umfeldüberwachungseinrichtung, mittels derer Objekte in einem Seitenrückraum des Fahrzeugs erfassbar sind und Maßnahmen zur Beeinflussung des Fahrzeugs oder des Fahrers einleitbar sind, wobei eine der Maßnahmen ein Warnen des Fahrers ist,
**dadurch gekennzeichnet,**
**dass** sie über einen Gefahrenrechner verfügt, mit dem zum Vermeiden einer Kollision bei dem Spurwechsel die Maßnahmen zur Beeinflussung des Fahrzeugs (1) abgestuft einleitbar sind, wobei die Maßnahmen entsprechend ihrer Stufe ein Warnen des Fahrers und ein Eingreifen in ein Lenksystem des Fahrzeugs (1) und ein Beeinflussen von Sicherheitsmitteln umfassen, und dass mittels des Gefahrenrechners Maßnahmen einer Stufe einleitbar sind, die in Abhängigkeit von einer relativen Position eines detektierten Objekts (4) in Bezug auf das Fahrzeug (1) und einer Relativgeschwindigkeit zwischen dem Fahrzeug (1) und dem detektierten Objekt (4) und einer Erfassung des Verlaufs der Fahrbahn bzw. der Fahrspuren im Rückraum des Fahrzeugs (1) sowie in Abhängigkeit von der Erfüllung einer Spurwechselbedingung bestimmbar ist, und dass
eine Lenkhandhabe vorgesehen ist, die mit einem richtungsfesten Lenkmoment beaufschlagt wird, um das Fahrzeug (1) vollständig in die momentane Fahrspur zurückzuführen oder in der Fahrspur zu halten, wenn aufgrund eines Spurwechsels auf die Zielspur der longitudinale Abstand zwischen dem Fahrzeug (1) und dem innerhalb der Zielspur detektierten Objekt (4) kleiner als ein vorgegebener Mindestabstand werden würde, wenn eine zweite Spurwechselbedingung erfüllt ist und wenn das Gefahrenpotential größer als ein erster Schwellenwert ist.

39. Vorrichtung nach Anspruch 38,
**dadurch gekennzeichnet,**
**dass** es sich bei der Umfeldüberwachungseinrichtung (5; 6) um ein Kamerasystem handelt, das zwei Kamerasensoren (5, 6) umfasst.

40. Vorrichtung nach Anspruch 39,
**dadurch gekennzeichnet,**
**dass** jeweils ein seitlicher Kamerasensor (5; 6) an einer Fahrzeugseite angeordnet ist.

41. Vorrichtung nach Anspruch 40,
**dadurch gekennzeichnet,**
**dass** die Kamerasensoren (5, 6) in die Außenspiegel (7,8) des Fahrzeugs (1) integriert sind.

42. Vorrichtung nach Anspruch 38,
**dadurch gekennzeichnet,**
**dass** die Umfeldüberwachungseinrichtung einen in den Rückraum des Fahrzeugs (1) gerichteten Kamerasensor sowie einen Nahbereichssensor auf jeder Fahrzeugseite umfasst, wobei mittels der Nahbereichsensoren Objekte in einem Seitenbereich des Fahrzeugs detektiert werden können.

43. Vorrichtung nach einem der Ansprüche 38 bis 42,
**dadurch gekennzeichnet,**
**dass** die seitlichen Kamerasensoren (5, 6) oder der in den Rückraum des Fahrzeugs gerichteten Kamerasensor auch für die Vermessung einer Parklücke eingesetzt werden können.

44. Vorrichtung nach einem der Ansprüche 38 bis 43,
**dadurch gekennzeichnet,**
**dass** der Gefahrenrechner auch dazu ausgebildet ist, aufgrund von Signalen der seitlichen Kamerasensoren (5, 6) oder des in den Rückraum des Fahrzeugs (1) gerichteten Kamerasensors eine Größe einer Parklücke und/oder eine relative Lage der Parklücke in Bezug auf das Fahrzeug (1) zu ermitteln.

45. Vorrichtung nach einem der Ansprüche 38 bis 44,
**dadurch gekennzeichnet,**
**dass** der Gefahrenrechner auch dazu ausgebildet ist, anhand der Signale der seitlichen Kamerasensoren (5, 6) oder des in den Rückraum des Fahrzeugs (1) gerichteten Kamerasensors eine Bahn des Fahrzeugs (1) für das Befahren der Parklücke ausgehend von einer Ausgangsposition zu ermitteln.

## Claims

1. A method for a vehicle to change lanes from a current lane to a target lane, in which objects in an area laterally behind the vehicle are detected by means of a surrounding area monitoring device and measures for influencing the vehicle or the driver are initiated, wherein one of said measures is a warning to the driver,
**characterized in that**
in order to avoid a collision during said change of lane, the measures are provided according to a multi-level system, wherein, depending on their level, said measures comprise the actions of warning the driver and interfering with a steering system of the vehicle (1) and influencing safety means, and that the measures of a selected level are initiated, wherein said level is determined in accordance with a relative position of a detected object (4) with regard to the vehicle (1) and a relative speed between the vehicle (1) and the detected object (4) and a detection of the course of the carriageway or the lanes in the area behind the vehicle (1) as well as in accordance with the fact whether a precondition for changing lanes is fulfilled, and a directionally fixed steering moment is applied to a steering implement in order to completely return the vehicle (1) to the current lane or keep said vehicle in said lane if a change of lane to the target lane would cause the longitudinal distance between the vehicle (1) and the object (4) detected within said target lane to become smaller than a predefined minimum distance, if a second precondition for changing lanes is fulfilled and if the risk potential exceeds a first threshold.

2. The method according to claim 1,
**characterized in that**
based on a detection of the area laterally behind (2, 3) the vehicle (1) by means of the surrounding area monitoring device (5, 6), a course of the carriageway in the area behind the vehicle (1) is ascertained.

3. The method according to claim 1 or 2,
**characterized in that**
depending on the position of the detected object (4) relative to the vehicle (1), the relative speed between the detected object (4) and the vehicle (1) and the course of the carriageway, a path of the detected object (4) is predicted.

4. The method according to any one of the preceding claims,
**characterized in that**
the surrounding area monitoring device (5, 6) is used to detect a road surface marking (9; 10) that separates the current lane of the vehicle (1) from the target lane.

5. The method according to any one of the preceding claims,
**characterized in that**
a detected object (4) is classified as belonging to the target lane based on the relative position of the object (4) with regard to the vehicle (1) and based on the course of the carriageway.

6. The method according to any one of the preceding claims,
**characterized in that**
an optical warning signal is produced if a change of lane to the target lane would cause a longitudinal distance between the vehicle (1) and an object (4) detected within said target lane to become smaller than a predefined minimum distance.

7. The method according to claim 6,
**characterized in that**
the optical warning signal is provided by switching on a lighting element that is integrated in an outside mirror (7; 8) of the vehicle (1).

8. The method according to claim 6,
**characterized in that**
the optical warning signal is provided by switching on a lighting element that is arranged on an A column of the vehicle.

9. The method according to any one of the preceding claims,
**characterized in that**
an acoustic warning signal is produced if a change of lane to the target lane would cause an ascertained distance between the vehicle (1) and an object (4) detected within said target lane to become smaller than a predefined minimum distance and a first precondition for changing lanes is fulfilled.

10. The method according to claim 9,
**characterized in that**
the acoustic warning signal is provided by causing at least one vehicle loudspeaker to produce a warning sound.

11. The method according to claim 10,
**characterized in that**
the vehicle loudspeaker is arranged on a side of the vehicle that faces the target lane.

12. The method according to any one of the preceding claims,
**characterized in that**
the first precondition for changing lanes is fulfilled if the driver activates a directional indicator on the side of the vehicle that faces the target lane.

13. The method according to any one of the preceding claims,
**characterized in that**
a haptic warning signal is produced if a change of lane to the target lane would cause the longitudinal distance between the vehicle (1) and the object (4) detected within said target lane to become smaller than a predefined minimum distance and if a second precondition for changing lanes is fulfilled.

14. The method according to any one of the preceding claims,
**characterized in that**
the second precondition for changing lanes is fulfilled if a distance between the vehicle (1) and the road surface marking (9; 10) decreases during a predefined period of time and/or to below a predefined minimum distance.

15. The method according to any one of the preceding claims,
**characterized in that**
the second precondition for changing lanes is fulfilled if a lateral distance between the vehicle (1) and a detected object (4) classified as belonging to the target lane decreases during a predefined period of time and/or to below a predefined minimum distance.

16. The method according to any one of claims 13 to 15,
**characterized in that**
the haptic warning signal is provided by applying a steering moment intended to change direction to a steering implement of the vehicle (1).

17. The method according to any one of the preceding claims,
**characterized in that**
a risk potential is ascertained in accordance with the longitudinal distance that would result from a change of lanes to the target lane between the vehicle (1) and the object (4) detected within said target lane and in accordance with a relative speed between the vehicle (1) and the detected object (4).

18. The method according to claim 17,
**characterized in that**
the course of the carriageway is used to determine a position of the vehicle (1) within its lane, and that the risk potential is determined in accordance with the position of the vehicle (1) in its lane.

19. The method according to claim 17 or 18,
**characterized in that**
the risk potential is ascertained in accordance with the speed of the vehicle (1).

20. The method according to any one of claims 17 to 19,
**characterized in that**
the risk potential is ascertained in accordance with a yaw rate of the vehicle (1).

21. The method according to any one of claims 17 to 20,
**characterized in that**
the risk potential is ascertained in accordance with a steering angle of steerable wheels of the vehicle (1).

22. The method according to any one of claims 17 to 21,
**characterized in that**
the risk potential is ascertained in accordance with a steering angle speed and/or a steering moment applied by the driver of the vehicle (1).

23. The method according to any one of claims 13 to 22,
**characterized in that**
the haptic warning signal is produced for a period of time that is determined in accordance with the present risk potential.

24. The method according to claim 23,
**characterized in that**
a distance between the vehicle (1) and an object in an area in front of the vehicle (1) can be detected by means of another object detection device, and that a directionally fixed moment is only applied to the steering implement if no object whose distance from the vehicle (1) is below a predefined minimum distance is detected in said area in front of the vehicle.

25. The method according to claim 24,
**characterized in that**
the minimum distance is determined in accordance with a relative speed between the vehicle (1) and an object detected in the area in front of the vehicle (1).

26. The method according to any one of the preceding claims,
**characterized in that**
at least one reversible safety means of the vehicle (1) is influenced if a change of lane to the target lane would cause the longitudinal distance between the vehicle (1) and an object (4) detected within said target lane to become smaller than a predefined minimum distance, if the second precondition for changing lanes is fulfilled and if the risk potential exceeds a second threshold.

27. The method according to claim 26,
**characterized in that**
the second threshold value exceeds the first threshold value.

28. The method according to any one of the preceding claims,
**characterized in that**
at least one reversible safety means of the vehicle (1) is influenced if, based on the predicted path of the object, it is found that said object is on a collision course with the vehicle (1) and a collision with the vehicle (1) is to be expected within a first collision period.

29. The method according to any one of claims 26 to 28,
**characterized in that**
the reversible safety means is a reversible safety belt tensioner.

30. The method according to any one of claims 26 to 29,
**characterized in that**
the reversible safety means is at least one actuator that changes a seated position of the driver and/or front passenger of the vehicle (1).

31. The method according to any one of claims 26 to 30,
**characterized in that**
the reversible safety means is at least one actuator that closes a sunroof and/or a window of the vehicle (1).

32. The method according to any one of the preceding claims,
**characterized in that**
at least one irreversible safety means of the vehicle (1) is influenced if a change of lane to the target lane would cause the longitudinal distance between the vehicle (1) and the object detected within said target lane to become smaller than a predefined minimum distance, if the second precondition for changing lanes is fulfilled and if the risk potential exceeds a third threshold.

33. The method according to claim 32,
**characterized in that**
the third threshold exceeds the second threshold.

34. The method according to any one of the preceding claims,
**characterized in that**
at least one irreversible safety means of the vehicle (1) is influenced if, based on the predicted path of the object, it is found that said object is on a collision course with the vehicle (1) and a collision with the vehicle (1) is to be expected within a second collision period.

35. The method according to claim 34,
**characterized in that**
the second collision period is shorter than the first collision period.

36. The method according to any one of claims 32 to 35,
**characterized in that**
the irreversible safety means is influenced by changing activation criteria of said irreversible safety means.

37. The method according to any one of claims 32 to 36,
**characterized in that**
the irreversible safety means is an air bag.

38. A device for a vehicle to change lanes from a current lane to a target lane, comprising a surrounding area monitoring device by means of which objects in an area laterally behind the vehicle can be detected and measures for influencing the vehicle or the driver can be initiated, wherein one of said measures is a warning to the driver,
**characterized in that**
said device is provided with a risk computer by means of which, in order to avoid a collision during said change of lane, the measures intended to influence the vehicle (1) can be initiated according to a multi-level system, wherein, depending on their level, said measures comprise the actions of warning the driver and interfering with a steering system of the vehicle (1) and influencing safety means, and that by means of the risk computer, measures of a selected level can be initiated, which level can be determined in accordance with a relative position of a detected object (4) with regard to the vehicle (1) and a relative speed between the vehicle (1) and the detected object (4) and a detection of the course of the carriageway or the lanes in the area behind the vehicle (1) as well as in accordance with the fact whether a precondition for changing lanes is fulfilled, and that
a steering implement is provided to which a directionally fixed steering moment is applied in order to completely return the vehicle (1) to the current lane or keep said vehicle in said lane if a change of lane to the target lane would cause the longitudinal distance between the vehicle (1) and the object (4) detected within said target lane to become smaller than a predefined minimum distance, if a second precondition for changing lanes is fulfilled and if the risk potential exceeds a first threshold.

39. The device according to claim 38,
**characterized in that**
the surrounding area monitoring device (5; 6) is a camera system comprising two camera sensors (5, 6).

40. The device according to claim 39,
**characterized in that**
a lateral camera sensor (5; 6) is arranged on either side of the vehicle.

41. The device according to claim 40,
**characterized in that**
the camera sensors (5, 6) are integrated in the outside mirrors (7, 8) of the vehicle (1).

42. The device according to claim 38,
**characterized in that**
the surrounding area monitoring device comprises a camera sensor directed towards the area behind the vehicle (1) and a short-range sensor on either side of the vehicle, wherein objects in an area on the side of the vehicle can be detected by means of said short-range sensors.

43. The device according to any one of claims 38 to 42,
**characterized in that**
the lateral camera sensors (5, 6) or the camera sensor directed towards the area behind the vehicle can also be used to measure a parking space.

44. The device according to any one of claims 38 to 43,
**characterized in that**
the risk computer is also designed to use signals of the lateral camera sensors (5, 6) or of the camera sensor directed towards the area behind the vehicle (1) to ascertain a size of a parking space and/or a relative position of said parking space with regard to the vehicle (1).

45. The device according to any one of claims 38 to 44,
**characterized in that**
the risk computer is also designed to use the signals of the lateral camera sensors (5, 6) or of the camera sensor directed towards the area behind the vehicle (1) to ascertain a path of the vehicle (1) for entering the parking space from an initial position.

## Revendications

1. Procédé de changement de voie d'un véhicule pour passer d'une voie momentanée à une voie visée, dans lequel des objets dans un espace arrière latéral du véhicule sont détectés au moyen d'un dispositif de surveillance d'environnement, et des dispositions pour influencer le véhicule ou le conducteur sont mises en oeuvre, une des dispositions étant un avertissement du conducteur,
**caractérisé en ce que**,
pour éviter une collision lors du changement de voie, les dispositions sont prévues de façon étagée, les dispositions comprenant, en fonction de leur niveau, l'avertissement du conducteur et une intervention dans le système de direction du véhicule (1) et une influence exercée sur des moyens de sécurité, et **en ce que** les dispositions d'un niveau sélectionné sont mises en oeuvre, le niveau étant défini en fonction d'une position relative d'un objet détecté (4) par rapport au véhicule (1) et d'une vitesse relative entre le véhicule (1) et l'objet détecté (4), et d'une détection du tracé de la file ou respectivement des voies dans l'espace arrière du véhicule (1), ainsi qu'en fonction du respect d'une condition de changement de voie, et une manette de direction est soumise à un moment de braquage à direction fixe pour ramener le véhicule (1) complètement dans la voie momentanée ou pour le maintenir dans la voie quand, du fait d'un changement de voie vers la voie visée, la distance longitudinale entre le véhicule (1) et l'objet détecté (4) à l'intérieur de la voie visée deviendrait plus petite qu'une distance minimale prédéfinie quand une deuxième condition changement de voie est remplie et quand le potentiel de danger est plus grand qu'une première valeur de seuil.

2. Procédé selon la revendication 1,
**caractérisé en ce que**,
du fait d'une détection de l'espace arrière latéral (2, 3) du véhicule (1) au moyen du dispositif de surveillance d'environnement (5, 6), un tracé de file est déterminé dans l'espace arrière du véhicule (1).

3. Procédé selon la revendication 1 ou 2,
**caractérisé en ce que**,
en fonction de la position de l'objet détecté (4) par rapport au véhicule (1), de la vitesse relative entre l'objet détecté (4) et le véhicule (1) ainsi que du tracé de file, une trajectoire de l'objet détecté (4) est prédite.

4. Procédé selon une des revendications précédentes,
**caractérisé en ce que**,
au moyen du dispositif de surveillance d'environnement (5, 6), un marquage de chaussée (9 ; 10) est détecté, qui sépare la voie momentanée du véhicule (1) et la voie visée.

5. Procédé selon une des revendications précédentes,
**caractérisé en ce**
**qu'**un objet détecté (4) est affecté à la voie visée à l'aide de la position relative de l'objet (4) par rapport au véhicule (1) et à l'aide du tracé de file.

6. Procédé selon une des revendications précédentes,
**caractérisé en ce**
**qu'**un signal d'avertissement optique est déclenché quand, du fait d'un changement de voie vers la voie visée, une distance longitudinale entre le véhicule (1) et un objet détecté (4) détecté à l'intérieur de la voie visée deviendrait plus petite qu'une distance minimale prédéfinie.

7. Procédé selon la revendication 6,
**caractérisé en ce que**
le signal d'avertissement optique est déclenché par une mise en circuit d'un élément lumineux intégré dans un rétroviseur extérieur (7 ; 8) du véhicule (1).

8. Procédé selon la revendication 6,
**caractérisé en ce que**
le signal d'avertissement optique est déclenché par une mise en circuit d'un élément lumineux disposé sur un montant A du véhicule.

9. Procédé selon une des revendications précédentes,
**caractérisé en ce**
**qu'**un signal d'avertissement acoustique est déclenché quand, du fait d'un changement de voie vers la voie visée, une distance déterminée entre le véhicule (1) et un objet détecté (4) à l'intérieur de la voie visée deviendrait plus petite qu'une distance minimale prédéfinie, et quand une première condition de changement de voie est remplie.

10. Procédé selon la revendication 9,
**caractérisé en ce que**
le signal d'avertissement acoustique est déclenché par le fait qu'au moins un haut-parleur du véhicule est amené à émettre un son d'avertissement.

11. Procédé selon la revendication 10,
**caractérisé en ce que**
le haut-parleur du véhicule est disposé sur un côté du véhicule dirigé vers la voie visée.

12. Procédé selon une des revendications précédentes,
**caractérisé en ce que**
la première condition de changement de voie est remplie quand le conducteur active un indicateur de changement de direction sur le côté du véhicule dirigé vers la voie visée.

13. Procédé selon une des revendications précédentes,
**caractérisé en ce**
**qu'**un signal d'avertissement haptique est déclenché quand, du fait d'un changement de voie vers la voie visée, la distance longitudinale entre le véhicule (1) et l'objet détecté (4) à l'intérieur de la voie visée deviendrait plus petite qu'une distance minimale prédéfinie, et quand une deuxième condition changement de voie est remplie.

14. Procédé selon une des revendications précédentes,
**caractérisé en ce que**
la deuxième condition changement de voie est remplie quand une distance entre le véhicule (1) et le marquage de chaussée (9 ; 10) diminue pendant une durée prédéfinie et/ou passe sous une distance minimale prédéfinie.

15. Procédé selon une des revendications précédentes,
**caractérisé en ce que**
la deuxième condition changement de voie est remplie quand une distance latérale entre le véhicule (1) et un objet détecté (4) affecté à la voie visée diminue pendant une durée prédéfinie et/ou passe sous une distance minimale prédéfinie.

16. Procédé selon une des revendications 13 à 15,
**caractérisé en ce que**
le signal d'avertissement haptique est déclenché par le fait qu'une manette de direction du véhicule (1) est soumise à un moment de braquage avec changement de direction.

17. Procédé selon une des revendications précédentes,
**caractérisé en ce**
**qu'**un potentiel de danger est déterminé en fonction de la distance longitudinale qui s'établirait entre le véhicule (1) et l'objet détecté (4) à l'intérieur de la voie visée du fait d'un changement de voie vers la voie visée ainsi qu'en fonction d'une vitesse relative entre le véhicule (1) et l'objet détecté (4).

18. Procédé selon la revendication 17,
**caractérisé en ce que**,
à l'aide du tracé de file, une position du véhicule (1) est définie à l'intérieur de sa voie, et **en ce que** le potentiel de danger est défini en fonction de la position du véhicule (1) dans sa voie.

19. Procédé selon la revendication 17 ou 18,
**caractérisé en ce que**
le potentiel de danger est déterminé en fonction de la vitesse du véhicule (1).

20. Procédé selon une des revendications 17 à 19,
**caractérisé en ce que**
le potentiel de danger est déterminé en fonction d'un taux d'embardée du véhicule (1).

21. Procédé selon une des revendications 17 à 20,
**caractérisé en ce que**
le potentiel de danger est déterminé en fonction d'un angle de braquage de roues directrices du véhicule (1).

22. Procédé selon une des revendications 17 à 21,
**caractérisé en ce que**
le potentiel de danger est déterminé en fonction d'une vitesse angulaire de braquage et/ou d'un moment de braquage appliqué par le conducteur du véhicule (1).

23. Procédé selon une des revendications 13 à 22,
**caractérisé en ce que**
le signal d'avertissement haptique est déclenché pendant une durée qui est définie en fonction du potentiel de danger existant.

24. Procédé selon la revendication 23,
**caractérisé en ce que**,
au moyen d'un autre dispositif de détection d'objet, une distance entre le véhicule (1) et un objet dans un espace avant du véhicule (1) est détectable, et **en ce que** la manette de direction n'est soumise à un moment à direction fixe que si, dans l'espace avant, aucun objet n'est détecté dont la distance au véhicule (1) est plus petite qu'une distance minimale prédéfinie.

25. Procédé selon la revendication 24,
**caractérisé en ce que**
la distance minimale est définie en fonction d'une vitesse relative entre le véhicule (1) et un objet détecté dans l'espace avant du véhicule (1).

26. Procédé selon une des revendications précédentes,
**caractérisé en ce**
**qu'**un influence est exercée sur au moins un moyen de sécurité réversible du véhicule (1) quand, du fait d'un changement de voie vers la voie visée, la distance longitudinale entre le véhicule (1) et un objet détecté (4) à l'intérieur de la voie visée deviendrait plus petit qu'une distance minimale prédéfinie quand la deuxième condition changement de voie est remplie et quand le potentiel de danger est plus grand qu'une deuxième valeur de seuil.

27. Procédé selon la revendication 26,
**caractérisé en ce que**
la deuxième valeur de seuil est plus grande que la première valeur de seuil.

28. Procédé selon une des revendications précédentes,
**caractérisé en ce**
**qu'**une influence est exercée sur au moins un moyen de sécurité réversible du véhicule (1) quand, du fait de la trajectoire prédite de l'objet, il est constaté que l'objet se trouve sur un trajet de collision avec le véhicule (1) et qu'il faut s'attendre à une collision avec le véhicule (1) à l'intérieur d'une première durée de collision.

29. Procédé selon une des revendications 26 à 28,
**caractérisé en ce que**,
concernant le moyen de sécurité réversible, il s'agit d'un prétensionneur de ceinture réversible.

30. Procédé selon une des revendications 26 à 29,
**caractérisé en ce que**,
concernant le moyen de sécurité réversible, il s'agit au moins d'un actionneur avec lequel une position assise du conducteur et/ou du passager avant du véhicule (1) est modifiée.

31. Procédé selon une des revendications 26 à 30,
**caractérisé en ce que**,
concernant le moyen de sécurité réversible, il s'agit au moins d'un actionneur avec lequel un toit coulissant et/ou une fenêtre du véhicule (1) est fermé(e).

32. Procédé selon une des revendications précédentes,
**caractérisé en ce**
**qu'**une influence est exercée sur au moins un moyen de sécurité irréversible du véhicule (1) quand, du fait d'un changement de voie vers la voie visée, la distance longitudinale entre le véhicule (1) et l'objet détecté à l'intérieur de la voie visée deviendrait plus petit qu'une distance minimale prédéfinie quand la deuxième condition changement de voie est remplie et quand le potentiel de danger est plus grand qu'une troisième valeur de seuil.

33. Procédé selon la revendication 32,
**caractérisé en ce que**
la troisième valeur de seuil est plus grande que la deuxième valeur de seuil.

34. Procédé selon une des revendications précédentes,
**caractérisé en ce**
**qu'**une influence est exercée sur au moins un moyen de sécurité irréversible du véhicule (1) quand, du fait de la trajectoire prédite de l'objet, il est constaté que l'objet se trouve sur un trajet de collision avec le véhicule (1) et qu'il faut s'attendre à une collision avec le véhicule (1) à l'intérieur d'une deuxième durée de collision.

35. Procédé selon la revendication 34,
**caractérisé en ce que**
la deuxième durée de collision est plus petite que la première durée de collision.

36. Procédé selon une des revendications 32 à 35,
**caractérisé en ce que**
l'influence exercée sur au moins un moyen de sécurité irréversible s'effectue par le fait que des critères d'activation du moyen de sécurité irréversible sont modifiés.

37. Procédé selon une des revendications 32 à 36,
**caractérisé en ce que**,
concernant le moyen de sécurité irréversible, il s'agit d'un airbag.

38. Dispositif de changement de voie d'un véhicule passant d'une voie momentanée à une voie visée, comprenant un dispositif de surveillance d'environnement au moyen duquel des objets peuvent être détectés dans un espace arrière latéral du véhicule, et des dispositions peuvent être mises en oeuvre pour exercer une influence sur le véhicule ou sur le conducteur, une des dispositions étant un avertissement du conducteur,
**caractérisé en ce que**
le dispositif dispose d'un calculateur de risque avec lequel, pour éviter une collision lors du changement de voie, les dispositions pour influencer le véhicule (1) peuvent être mises en oeuvre de façon étagée, les dispositions comprenant, selon leur niveau, un avertissement du conducteur et une intervention dans un système de direction du véhicule (1), et une influence exercée sur des moyens de sécurité, et **en ce que**, au moyen du calculateur de risque, il est possible de mettre en oeuvre des dispositions d'un niveau qui peut être défini en fonction d'une position relative d'un objet détecté (4) par rapport au véhicule (1), et en fonction d'une vitesse relative entre le véhicule (1) et l'objet détecté (4), et d'une détection du tracé de la file ou respectivement des voies dans l'espace arrière du véhicule ainsi qu'en fonction du respect d'une condition de changement de voie, et **en ce qu'**il est prévu une manette de direction qui est soumise à un moment de braquage à direction fixe pour ramener le véhicule (1) complètement dans la voie momentanée ou pour le maintenir dans la voie quand, du fait d'un changement de voie vers la voie visée, la distance longitudinale entre le véhicule (1) et l'objet détecté (4) détecté à l'intérieur de la voie visée deviendrait plus petite qu'une distance minimale prédéfinie quand une deuxième condition changement de voie est remplie et quand le potentiel de danger est plus grand qu'une première valeur de seuil.

39. Dispositif selon la revendication 38,
**caractérisé en ce que**,
en ce qui concerne le dispositif de surveillance d'environnement (5 ; 6), il s'agit d'un système de caméra qui comprend deux capteurs de caméra (5, 6).

40. Dispositif selon la revendication 39,
**caractérisé en ce que**
respectivement un capteur de caméra (5 ; 6) latéral est disposé sur un côté du véhicule.

41. Dispositif selon la revendication 40,
**caractérisé en ce que**
les capteurs de caméra (5, 6) sont intégrés dans les rétroviseurs extérieurs (7, 8) du véhicule (1).

42. Dispositif selon la revendication 38,
**caractérisé en ce que**
le dispositif de surveillance d'environnement comprend un capteur de caméra dirigé vers l'espace arrière du véhicule (1) ainsi qu'un détecteur de zone proche sur chaque côté du véhicule, des objets pouvant être détectés dans une zone latérale du véhicule au moyens des détecteurs de zone proche.

43. Dispositif selon une des revendications 38 à 42,
**caractérisé en ce que**
les capteurs de caméra (5, 6) latéraux ou le détecteur de caméra dirigé vers l'espace arrière du véhicule peuvent être utilisés également pour la mesure d'un créneau.

44. Dispositif selon une des revendications 38 à 43,
**caractérisé en ce que**
le calculateur de risque est également constitué pour déterminer, sur la base de signaux des capteurs de caméra (5, 6) latéraux ou du capteur de caméra dirigé vers l'espace arrière du véhicule (1), une grandeur d'un créneau et/ou une position relative du créneau par rapport au véhicule (1).

45. Dispositif selon une des revendications 38 à 44,
**caractérisé en ce que**
le calculateur de risque est également constitué pour déterminer, sur la base des signaux des capteurs de caméra (5, 6) latéraux ou du capteur de caméra dirigé vers l'espace arrière du véhicule (1), une trajectoire du véhicule (1) pour emprunter le créneau en partant d'une position initiale.
